(19) Europäisches Patentamt
European Patent Office
Office européen des brevets

(11) **EP 3 685 674 A1**

(12) **EUROPEAN PATENT APPLICATION**

(43) Date of publication:
**29.07.2020 Bulletin 2020/31**

(21) Application number: **19202334.9**

(22) Date of filing: **09.10.2019**

(51) Int Cl.:
*A23G 1/00* (2006.01)     *A23G 1/20* (2006.01)
*A23G 1/54* (2006.01)     *B65D 85/804* (2006.01)
*A23G 1/50* (2006.01)     *A23P 30/20* (2016.01)
*A23P 20/25* (2016.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.10.2018 DE 102018217443**

(71) Applicant: **Katjes Fassin GmbH. + Co. Kommanditgesellschaft 46446 Emmerich (DE)**

(72) Inventors:
• AYDIN, Bülent
  46446 Emmerich (DE)
• DÜLG, Anton
  91301 Forchheim (DE)
• PUTZ, Maria
  91301 Forchheim (DE)

(74) Representative: **Herzog IP Patentanwalts GmbH Immermannstraße 40 40210 Düsseldorf (DE)**

(54) **PRINTER CARTRIDGE WITH A CHOCOLATE MASS, IN PARTICULAR FOR 3D PRINTING OF A CHOCOLATE FINISHED PRODUCT**

(57) The invention relates to a printer cartridge, comprising
a) an outer wall, and
b) a chocolate mass,
wherein the outer wall at least partially encloses an inner space, wherein the inner space comprises the chocolate mass, wherein the chocolate mass comprises a total fat content, wherein the total fat content comprises one or more fatty acid residues, each of which
a. has no double bond, and
b. comprises a number of C atoms per fatty acid residue in the range of 12 to 24,
to a total content in the range of 40 to 75 wt%, based on the total fat content. The invention further relates to a method comprising moulding of a chocolate mass; a 3D printer; a chocolate product by means of the above method or with the above 3D printer; a chocolate product; a use of a 3D printer for printing a chocolate mass; a use of a container for 3D printing of chocolate; a use of an oil in a chocolate mass for 3D printing of chocolate; and a use of a chocolate mass for 3D printing of chocolate.

Figure 1

100

**Description**

The present invention relates to a printer cartridge, comprising

a) an outer wall, and
b) a chocolate mass,

wherein the outer wall at least partially encloses an inner space, wherein the inner space comprises the chocolate mass, wherein the chocolate mass comprises a total fat content, wherein the total fat content comprises one or more fatty acid residues, each of which

a. has no double bond, and
b. comprises a number of C atoms per fatty acid residue in the range of 12 to 24,

to a total content in the range of 40 to 75 wt%, based on the total fat content. The invention further relates to a method comprising moulding of a chocolate mass; a 3D printer; a chocolate product by means of the above method or with the above 3D printer; a chocolate product; a use of a 3D printer for printing a chocolate mass; a use of a container for 3D printing of chocolate; a use of an oil in a chocolate mass for 3D printing of chocolate; and a use of a chocolate mass for 3D printing of chocolate.

Several methods for the moulding of chocolate mass into chocolate products have long been known from the prior art. These conventional methods ordinarily comprise the pouring of a liquid chocolate mass into a negative mould. A conventional method of this type is referred to as "moulding in". In this process, a liquid chocolate mass is poured into preheated moulds. After the chocolate mass has cooled in the moulds and thus solidified, it can be "moulded out". The above-mentioned moulding methods of the prior art have numerous drawbacks. For example, for each form of a chocolate product to be produced, a negative mould is required. This mould must be configured, finished, purified, and also stored in a complex process. Furthermore, such casting-mould-based chocolate production is complex and is therefore typically carried out by professional manufacturers, but not by the end customer personally. In contrast, 3D printing of chocolate, which is generally known in the prior art, has numerous advantages. For example, a casting mould is not needed, which makes the moulding method simpler and is more flexible with respect to the wide variety of forms of the chocolate product to be produced. The first chocolate 3D printers, which can be operated by the end customer personally, are already known from the prior art. However, there is still some room for improvement in these known 3D printers and the corresponding 3D printing methods. For example, the 3D printers known from the prior art require a relatively long time to print a chocolate product. Furthermore, the 3D printing of chocolate of the prior art often involves a highly complex process sequence. This often also leads to relatively high energy consumption of the chocolate 3D printers of the prior art.

In general, an object of the present invention is to at least partially overcome a drawback arising from the prior art. A further object of the invention is to allow 3D printing of a chocolate product, wherein the printed chocolate product is more rapidly available to the user for consumption or storage. For this purpose, the above-mentioned 3D printing preferably takes place more quickly. Alternatively or additionally, a cooling process of the printed chocolate product can preferably be kept shorter by means of the above-mentioned methods. A further object of the invention is to make 3D printing of chocolate without active cooling of a chocolate mass or a printed chocolate product possible. A further object of the invention is to allow a simpler process for the 3D printing of chocolate. A further object of the invention is to allow 3D printing of chocolate that places less stringent technical requirements, in particular with respect to its precision, on a 3D printer. A further object of the invention is to allow 3D printing of chocolate that can be carried out using a 3D printer with a simpler construction. A further object of the invention is to allow 3D printing of chocolate that can be carried out with a 3D printer with lower power consumption. A further object of the invention is to allow 3D printing of chocolate that is more flexible with respect to the environmental conditions, such as e.g. temperature and humidity. For this reason, the above-mentioned methods are preferably suitable for being carried out outside of buildings, in the retail sector, or in gastronomy. By means of the above-mentioned advantageous 3D printing, a chocolate product is preferably obtainable that is suitable for direct consumption by the end customer. Furthermore, this chocolate finished product preferably contains a portion of stable beta-5 crystals in the chocolate. A further object of the invention is to allow the above-mentioned advantageous 3D printing of chocolate at least with milk chocolate and white chocolate.

In order to at least partially achieve at least one of the above-mentioned objects, the invention provides a printer cartridge, a 3D printer and a method.

A contribution to at least partially achieving at least one of the above-mentioned objects is provided by the independent claims. The dependent claims provide preferred embodiments that contribute to at least partially achieving at least one of the objects.

A contribution to achieving at least one of the objects of the invention is provided by an embodiment 1 of a printer cartridge, comprising

a) an outer wall, and
b) a chocolate mass,

wherein the outer wall at least partially encloses an inner space, wherein the inner space comprises the chocolate mass, wherein the chocolate mass comprises a total fat content, wherein the total fat content comprises one or more fatty acid residues, each of which

a. has no double bond, and
b. comprises a number of C atoms per fatty acid residue in the range of 12 to 24,

to a total content in the range of 40 to 75 wt%, preferably 45 to 70 wt%, more preferably 50 to 65 wt%, based in each case on the total fat content. In a preferred embodiment, the total fat content comprises one or more fatty acid residues, each of which has no double bond, and comprises a number of C atoms per fatty acid residue in the range of 12 to 24, to a total content in the range of 57 to 67 wt%, based on the total fat content. In a further preferred embodiment, the total fat content comprises one or more fatty acid residues, each of which has no double bond, and comprises a number of C atoms per fatty acid residue in the range of 12 to 24, to a total content in the range of 50 to 60 wt%, based on the total fat content.

In a further preferred embodiment, the total fat content comprises one or more fatty acid residues, each of which has no double bond, and comprises a number of C atoms per fatty acid residue in the range of 16 to 24, to a total content in the range of 30 to 70 wt%, more preferably 35 to 65 wt%, more preferably 40 to 60 wt%, and most preferably 45 to 58 wt%, based on the total fat content. In a further preferred embodiment, the total fat content comprises one or more fatty acid residues, each of which has no double bond, and comprises a number of C atoms per fatty acid residue in the range of 16 to 20, to a total content in the range of 30 to 70 wt%, more preferably 35 to 65 wt%, more preferably 40 to 60 wt%, and most preferably 43 to 60 wt%, based on the total fat content. In a further preferred embodiment, the total fat content comprises one or more fatty acid residues, each of which has no double bond, and comprises a number of C atoms per fatty acid residue in the range of 16 to 18, to a total content in the range of 30 to 70 wt%, more preferably 35 to 65 wt%, more preferably 40 to 60 wt%, and most preferably 43 to 60 wt%, based on the total fat content.

A preferred printer cartridge is a 3D printer cartridge. The printer cartridge is preferably configured to be inserted into a 3D printer. In this connection, a mould of the outer wall is preferably at least partially configured as a positive mould with respect to a negative mould formed by a receiving area of the 3D printer. A preferred receiving area of the 3D printer is a receiving shaft. Preferably, the printer cartridge is configured such that by means of force, at least part of the chocolate mass is dispensed through an opening in the printer cartridge. A preferred opening is a nozzle. A volume of the inner space can preferably be reduced by the force. For this purpose, the printer cartridge preferably comprises a piston or a plunger or both. In another embodiment, the printer cartridge is configured such that a piston not contained in the printer cartridge, which instead is preferably contained in a 3D printer, can reduce the volume of the inner space, so that at least part of the chocolate mass is dispensed from an opening in the printer cartridge. The piston can be slid into the inner space and thus preferably come into contact with the chocolate mass. In another embodiment, the piston does not engage in the inner space, but comes into contact with the outer wall of the printer cartridge from outside in order to reduce the volume of the inner space. Other embodiments for reducing the volume of the inner space are additionally or alternatively possible. A further preferred force is the application of a negative pressure. Preferably, the negative pressure can be applied via an opening in the outer wall of the printer cartridge and at least part of the chocolate mass can be dispensed from the opening in this manner. In a preferred embodiment, the printer cartridge is configured as a closed container comprising a closure. The closure is configured such that it can be opened while keeping the container open. Furthermore, the closed container preferably comprises a piston that is arranged and configured to act on the chocolate mass so that at least part of the chocolate mass is dispensed from the opening.

In an embodiment 2 according to the invention, the printer cartridge is configured according to embodiment 1, wherein the total fat content comprises one or more fatty acid residues having a number of C atoms per fatty acid residue in the range of 4 to 10 to a total content of less than 5 wt%, preferably less than 4 wt%, preferably less than 3 wt%, based in each case on the total fat content.

In an embodiment 3 according to the invention, the printer cartridge is configured according to embodiment 1 or 2, wherein the total fat content comprises one or more fatty acid residues with at least one double bond per fatty acid residue to a total content in the range of 20 to 60 wt%, preferably 25 to 55 wt%, more preferably 30 to 50 wt%, based in each case on the total fat content. In a preferred embodiment, the total fat content comprises one or more fatty acid residues with at least one double bond per fatty acid residue to a total content in the range of 30 to 45 wt%, based on the total fat content. In a further preferred embodiment, the total fat content comprises one or more fatty acid residues with at least one double bond per fatty acid residue to a total content in the range of 35 to 50 wt%, based on the total fat content. Fatty acid residues with at least one double bond per fatty acid residue are also referred to as unsaturated.

In an embodiment 4 according to the invention, the printer cartridge is configured according to one of the preceding embodiments, wherein the total fat content comprises one or more fatty acid residues without a double bond to a total content in the range of 40 to 80 wt%, preferably 45 to 75 wt%, more preferably 50 to 70 wt%, based in each case on the total fat content. In a preferred embodiment, the total fat content comprises one or more fatty acid residues without a double bond to a total content in the range of 55 to 75 wt%, based on the total fat content. In a further preferred embodiment, the total fat content comprises one or more fatty acid residues without a double bond to a total content in the range of 50 to 65 wt%, based on the total fat content. Fatty acid residues without a double bond are also referred to as saturated.

In an embodiment 5 according to the invention, the printer cartridge is configured according to one of the preceding embodiments, wherein the chocolate mass, according to the first differential scanning calorimetry described herein, shows a maximum at a temperature in the range of 25 to 29°C, preferably 26 to 28.8°C, more preferably 27 to 28.5°C, and most preferably 27 to 28.3°C.

In an embodiment 6 according to the invention, the printer cartridge is configured according to one of the preceding embodiments, wherein the chocolate mass, according to the first differential scanning calorimetry described herein, shows a melting enthalpy in the range of 5 to 30 J/g. In an embodiment, the melting enthalpy according to the first differential scanning calorimetry described herein, is preferably in the range of 5 to 20 J/g, more preferably 7 to 15 J/g. In a further preferred embodiment, the melting enthalpy according to the first differential scanning calorimetry described herein, is preferably in the range of 10 to 30 J/g, more preferably 15 to 25 J/g, and most preferably 17 to 25 J/g. In a further preferred embodiment, according to the second differential scanning calorimetry described herein, the chocolate mass shows a melting enthalpy in the range of 2 to 20 J/g, preferably 3 to 15 J/g, more preferably 5 to 12 J/g.

In an embodiment 7 according to the invention, the printer cartridge is configured according to one of the preceding embodiments, wherein the total fat content comprises one or more fat molecules with at least one oleic acid residue to a total content in the range of 50 to 80 wt%, preferably 55 to 75 wt%, more preferably 60 to 72 wt%, and most preferably 62 to 70 wt%, based in each case on the total fat content. The remaining fatty acid residues of the fat molecules with at least one oleic acid residue are preferably selected from the group composed of one or two palmitic acid residues, a linoleic acid residue, and one or more stearic acid residues, or a mixture of at least two thereof. Preferably, the fat molecules with at least one oleic acid residue are selected from the group composed of fat molecules with the following combinations of fatty acid residues: POS, SOS, POP, SOO, POO, PLO and OOO, wherein O stands for oleic acid residue, P for palmitic acid residue, L for linoleic acid residue and S for stearic acid residue.

In an embodiment 8 according to the invention, the printer cartridge is configured according to one of the preceding embodiments, wherein the total fat content comprises one or more fat molecules with at least two oleic acid residues to a total content in the range of 3 to 30 wt%, preferably 4 to 25 wt%, more preferably 5 to 20 wt%, based in each case on the total fat content. In a preferred embodiment, the total fat content comprises one or more fat molecules with at least two oleic acid residues to a total content in the range of 3 to 20 wt%, preferably 3 to 15 wt%, and most preferably 4 to 12 wt%, based in each case on the total fat content. In a further preferred embodiment, the total fat content comprises one or more fat molecules with at least two oleic acid residues to a total content in the range of 10 to 30 wt%, preferably 12 to 25 wt%, and most preferably 14 to 20 wt%, based in each case on the total fat content. In the preceding, the remaining fatty acid residue of each fat molecule with at least two oleic acid residues is preferably a palmitic acid residue, a stearic acid residue or a third oleic acid residue, wherein the above amounts are based on the total of all these fat molecules. Preferably, the fat molecules with at least two oleic acid residues are selected from the group composed of fat molecules with the following combinations of fatty acid residues: SOO, POO, and OOO, wherein O stands for oleic acid residue, P for palmitic acid residue, and S for stearic acid residue.

In an embodiment 9 according to the invention, the printer cartridge is configured according to one of the preceding embodiments, wherein the total fat content comprises fat molecules with 3 oleic acid residues to a total content in the range of 0.5 to 15 wt%, preferably 0.5 to 12 wt%, more preferably 1 to 10 wt%, based in each case on the total fat content. In a preferred embodiment, the total fat content comprises fat molecules with 3 oleic acid residues to a total content in the range of 4 to 12 wt%, preferably 5 to 10 wt%, more preferably 6 to 9 wt%, based in each case on the total fat content. In a further preferred embodiment, the total fat content comprises fat molecules with 3 oleic acid residues to a total content in the range of 0.5 to 8 wt%, preferably 0.5 to 6 wt%, more preferably 0.5 to 3 wt%, and most preferably 1.0 to 2.5 wt%, based in each case on the total fat content.

In an embodiment 10 according to the invention, the printer cartridge is configured according to one of the preceding embodiments, wherein the chocolate mass has a viscosity according to the method described herein in the range of 1.5 to 5.0 Pa·s, preferably 1.8 to 4.0 Pa·s, more preferably 2.0 to 3.2 Pa·s, and most preferably 2.2 to 3.0 Pa·s.

In an embodiment 11 according to the invention, the printer cartridge is configured according to one of the preceding embodiments, wherein the chocolate mass has a yield point according to the method described herein in the range of 20 to 70 Pa. In a preferred embodiment, the chocolate mass has a yield point according to the method described herein in the range of 20 to 40 Pa, more preferably 22 to 35 Pa, and most preferably 25 to 33 Pa. In a further preferred embodiment, the chocolate mass has a yield point according to the method described herein in the range of 40 to 65 Pa, more preferably 45 to 65 Pa, and most preferably 50 to 60 Pa.

In an embodiment 12 according to the invention, the printer cartridge is configured according to one of the preceding embodiments, wherein the total fat content is in the range of 25 to 60 wt%, preferably 30 to 55 wt%, more preferably 35 to 50 wt%, and most preferably 38 to 45 wt%, based in each case on the total weight of the chocolate mass.

In an embodiment 13 according to the invention, the printer cartridge is configured according to one of the preceding embodiments, wherein the printer cartridge is configured to print the chocolate mass by means of a 3D printer.

In an embodiment 14 according to the invention, the printer cartridge is configured according to one of the preceding embodiments, wherein the inner space comprises an amount of the chocolate mass in the range of 5 to 100 g, preferably 10 to 75 g, more preferably 10 to 50 g, more preferably 15 to 40 g, more preferably 20 to 30 g.

In an embodiment 15 according to the invention, the printer cartridge is configured according to one of the preceding embodiments, wherein the total fat content according to the method described herein has a solid fat content at 20°C in the range of 25 to 55 wt%, preferably 28 to 50 wt%, more preferably 30 to 48 wt%, based in each case on the total fat content.

In an embodiment 16 according to the invention, the printer cartridge is configured according to one of the preceding embodiments, wherein the total fat content according to the method described herein has a solid fat content at 28°C in the range of 5 to 24 wt%, preferably 6 to 20 wt%, more preferably 6 to 18 wt%, based in each case on the total fat content.

In an embodiment 17 according to the invention, the printer cartridge is configured according to one of the preceding embodiments, wherein the total fat content comprises at least

A) a first fat component to a content in the range of 15 to 40 wt%, preferably 15 to 35 wt%, more preferably 15 to 30 wt%, and

B) a second fat component, different from the first fat component, to a content in the range of 5 to 30 wt%, preferably 10 to 25 wt%, more preferably 10 to 20 wt%, and most preferably 12 to 18 wt%,

based in each case on the total weight of the chocolate mass. Preferably, the first fat component is a cocoa butter component or a cocoa butter equivalent component or a mixture of the two. Preferably, the second fat component is a milk fat component. A preferred milk fat component is a component of a crystallized-out milk fat. A preferred crystallized-out milk fat is a clarified butter or a butter oil or both.

In an embodiment 18 according to the invention, the printer cartridge is configured according to embodiment 17, wherein the total fat content additionally comprises a third fat component different from the first fat component and the second fat component to a content in the range of 1 to 20 wt%, preferably 2 to 15 wt%, more preferably 3 to 10 wt%, based in each case on the total weight of the chocolate mass. Preferably, the third fat component is a proportion of oil.

A contribution to achieving at least one of the objects of the invention is provided by an embodiment 1 of a 3D printer 1, comprising the printer cartridge according to one of its embodiments 1 to 18.

A contribution to achieving at least one of the objects of the invention is provided by an embodiment 1 of a method, comprising as method steps

a) provision of

i) a device comprising a temperature setting device, preferably of a heating device, and
ii) a container comprising a chocolate mass;

b) bringing the container into contact with the device, preferably insertion of the container into the device;
c) setting the chocolate mass by means of the temperature setting device to a moulding temperature; and
d) moulding the chocolate mass at the moulding temperature by means of a nozzle having an outlet opening by overlaying a substrate with the chocolate mass to obtain a chocolate moulded body,

wherein the outlet opening of the nozzle follows a three-dimensional trajectory; wherein the chocolate mass, in method steps b) to d), takes on a maximum temperature of not more than 40°C, preferably not more than 38°C, preferably not more than 36°C, preferably not more than 34°C, preferably not more than 32°C, preferably not more than 31°C, more preferably not more than 30.5°C, more preferably not more than 30.0°C, and most preferably not more than 29.5°C.

In an embodiment 2 according to the invention, the method is configured according to embodiment 1, wherein the chocolate mass, in method steps b) to d), takes on a minimal temperature of not less than 15°C, preferably not less than 17°C, preferably not less than 19°C, preferably not less than 20°C, preferably not less than 21°C, preferably not less than 22°C, more preferably not less than 23°C, more preferably not less than 24°C, most preferably not less than 25°C.

In an embodiment 3 according to the invention, the method is configured according to embodiment 1 or 2, wherein a course over time of a temperature of the chocolate mass from method step b) to method step d), inclusive respectively, shows exactly one local extreme. The local extreme is preferably a local maximum.

In an embodiment 4 according to the invention, the method is configured according to one of the embodiments 1 to 3, wherein the moulding temperature is in the range of 25.0 to 35.0°C, preferably 25.0 to 34.0°C, more preferably 25.0 to 33.0°C, preferably 26.0 to 32.5°C, more preferably 26.0 to 32.0°C, more preferably 26.0 to 31.5°C, more preferably 26.0 to 31.0°C, more preferably 26.0 to 30.6°C, even more preferably 26.5 to 30.5°C, more preferably 26.5 to 30.4°C, more preferably 26.5 to 30.3°C, more preferably 27.0 to 30.2°C, more preferably 27.5 to 30.0°C, more preferably 27.5 to 29.9°C, more preferably 27.5 to 29.8°C, more preferably 27.5 to 29.7°C, more preferably 27.5 to 29.6°C, more preferably 27.5 to 29.5°C, more preferably 27.5 to 29.4°C, more preferably 27.5 to 29.3°C, more preferably 27.5 to 29.2°C, even more preferably 27.5 to 29.1°C, and most preferably 28.0 to 29.0°C.

In an embodiment 5 according to the invention, the method is configured according to one of the embodiments 1 to 4, wherein the chocolate mass, according to the first differential scanning calorimetry described herein, shows a maximum at a temperature in the range of 25 to 29°C, preferably 26 to 28.8°C, more preferably 27 to 28.5°C, and most preferably 27 to 28.3°C.

In an embodiment 6 according to the invention, the method is configured according to embodiment 5, wherein the moulding temperature does not deviate from the temperature of the maximum more than 2°C, preferably not more than 1.5°C, more preferably not more than 1.0°C.

In an embodiment 7 according to the invention, the method is configured according to one of the embodiments 1 to 6, wherein the method is a method for 3D printing of chocolate.

In an embodiment 8 according to the invention, the method is configured according to one of the embodiments 1 to 7, wherein the chocolate moulded body is a chocolate finished product.

In an embodiment 9 according to the invention, the method is configured according to one of the embodiments 1 to 8, wherein the moulding in method step d) takes place within a period in the range of 0.1 to 0.5 min per g of chocolate mass, preferably 0.2 to 0.4 min per g of chocolate mass, and more preferably 0.2 to 0.3 min per g of chocolate mass.

In an embodiment 10 according to the invention, the method is configured according to one of the embodiments 1 to 9, wherein the chocolate mass or the chocolate moulded body or both is not actively cooled in method step d). In particular, a gas flow is preferably not directed onto the chocolate mass or onto the chocolate moulded body or onto either of the two.

In an embodiment 11 according to the invention, the method is configured according to one of the embodiments 1 to 10, wherein the device is a 3D printer.

In an embodiment 12 according to the invention, the method is configured according to one of the embodiments 1 to 11, wherein the container is a printer cartridge. A preferred printer cartridge is a 3D printer cartridge. A preferred printer cartridge is the printer cartridge according to the invention according to one of its embodiments 1 to 18 as described above, wherein in particular the chocolate mass is preferably configured according to one of the embodiments of the printer cartridge according to the invention.

In an embodiment 13 according to the invention, the method is configured according to one of the embodiments 1 to 12, wherein the outlet opening has an opening area in the range of 0.1 to 3 mm$^2$, preferably 0.4 to 2.5 mm$^2$, more preferably 0.5 to 1.8 mm$^2$. The outlet opening can be of any shape considered suitable in the field. For example, the outlet opening can be round, angular, or slit-shaped. Preferably, the outlet opening is round, preferably circular.

In an embodiment 14 according to the invention, the method is configured according to one of the embodiments 1 to 13, wherein while moving along the three-dimensional trajectory, the chocolate mass is dispensed portion-wise in at least two portions from the outlet opening. Preferably, between the dispensing of two portions each of the chocolate mass from the outlet opening, the outlet opening moves over time along the three-dimensional trajectory.

In an embodiment 15 according to the invention, the method is configured according to one of the embodiments 1 to 14, wherein a distance between the substrate and the outlet opening increases monotonically along the three-dimensional trajectory. The distance increases monotonically if it either increases or remains constant in each step along the trajectory and increases overall in all of the steps along the trajectory.

In an embodiment 16 according to the invention, the method is configured according to one of the embodiments 1 to 15, wherein in method step d), the movement through the outlet opening is driven by an actuator, a motor or both. A preferred motor is a stepper motor.

In an embodiment 17 according to the invention, the method is configured according to one of the embodiments 1 to 16, wherein in method step d), the movement through the outlet opening, dispensing of the chocolate mass from the outlet opening, or both take(s) place in a computer-controlled manner.

In an embodiment 18 according to the invention, the method is configured according to embodiment 17, wherein the computer-controlled movement through the outlet opening, the computer-controlled dispensing of the chocolate mass from the outlet opening, or both take(s) place according to a digital data set via a chocolate finished product.

In an embodiment 19 according to the invention, the method is configured according to embodiment 18, wherein the digital data set comprises a model of the chocolate finished product.

In an embodiment 20 according to the invention, the method is configured according to embodiment 18 or 19, wherein the digital data set is stored on a data storage unit, wherein the data storage unit is installed in the device in a fixed manner. A preferred fixedly installed data storage unit is a semiconductor memory. A preferred semiconductor memory is a permanent storage unit, for example ROM (read only memory) or PROM (programmable read only memory), or a semi-permanent storage unit, for example EPROM (erasable programmable read only memory), EEPROM (electrically erasable programmable read only memory), Flash-EEPROM, FRAM (ferroelectric random access memory), MRAM (magnetoresistive random access memory) or phase-change RAM (phase-change random access memory).

In an embodiment 21 according to the invention, the method is configured according to embodiment 18 or 19, wherein the digital data set is stored on a data storage unit, wherein the data storage unit, having a data transfer connection, is reversibly connected to the device. The data storage unit is here preferably connected to the device via a USB (universal serial bus). Here, a preferred data storage unit is a flash-EEPROM. Additionally or alternatively, the digital data set can be stored on a storage medium that is at least partially read by the device, which for this purpose preferably comprises a reading device, before method step d). A preferred storage medium is a magnetic storage medium, an optical storage medium or a mechanical storage medium, or a mixed form of at least two thereof. Preferred mechanical storage media are for example a laser disc, CD-ROM, DVD-ROM, Blu-ray Disc™ and HD DVD™.

In an embodiment 22 according to the invention, the method is configured according to one of the embodiments 18 to 21, wherein the device comprises a data receiving device, wherein the data receiving device is arranged and configured to receive the digital data set via a wireless data transfer connection, wherein the data receiving device receives the digital data set by means of the wireless data transfer connection before method step d), preferably before method step c).

A contribution to achieving at least one of the objects of the invention is provided by an embodiment 1 of a 3D printer 2, comprising a container, wherein the container comprises

    a) an outer wall,
    b) an opening and
    c) a chocolate mass,

wherein the outer wall at least partially encloses an inner space, wherein the inner space comprises the chocolate mass, wherein the container is arranged and configured such that by exertion of force on the chocolate mass or the outer wall or both, at least part of the chocolate mass can be dispensed from the opening of the container, wherein the chocolate mass comprises a total fat content, wherein the total fat content comprises one or more fatty acid residues, each of which

    a. has no double bond, and
    b. comprises a number of C atoms per fatty acid residue in the range of 12 to 24,

to a total content in the range of 40 to 75 wt%, preferably 45 to 70 wt%, more preferably 50 to 65 wt%, based in each case on the total fat content. A preferred container is a printer cartridge. Preferably, the printer cartridge, in particular the chocolate mass contained therein, is configured according to an embodiment of the printer cartridge according to the invention.

A contribution to achieving at least one of the objects of the invention is provided by an embodiment 1 of a chocolate finished product, obtainable by the method according to one of its embodiments 1 to 22 or with the 3D printer 1 or 2, each according to its embodiment 1.

A contribution to achieving at least one of the objects of the invention is provided by an embodiment 1 of a chocolate product, comprising a wall, wherein the wall is characterized by a wall thickness in the range of 0.5 to 4 mm, preferably 0.5 to 3 mm, more preferably 0.5 to 2 mm.

In an embodiment 2 according to the invention, the chocolate product is configured according to embodiment 1, wherein the wall at least partially encloses a product inner space, wherein the product inner space is characterized by a volume of at least 0.5 cm$^3$, preferably at least 1 cm$^3$, more preferably at least 3 cm$^3$.

In an embodiment 3 according to the invention, the chocolate product is configured according to embodiment 2, wherein the product inner space comprises a supporting structure. A preferred supporting structure is configured to support the wall of the chocolate finished product. The supporting structure is configured to stabilize a shape of the chocolate product. For this purpose, the supporting structure can comprise supporting struts. A preferred supporting structure is composed of a material of which at least part of the remaining chocolate product also consists.

In an embodiment 4 according to the invention, the chocolate product is configured according to one of embodiments 1 to 3, wherein the wall comprises at least one opening.

In an embodiment 5 according to the invention, the chocolate product is configured according to embodiment 4, wherein the opening is characterized by a width in the range of 0.5 to 3 mm, preferably 1 to 3 mm, and more preferably 2 to 3 mm. The width of the opening is the greatest extension of the opening along a straight line in an opening plane.

In an embodiment 6 according to the invention, the chocolate product is configured according to one of embodiments 1 to 5, wherein the chocolate product comprises a hole, wherein the hole has a depth of at least 3 mm, preferably at least 4 mm, more preferably at least 5 mm, more preferably at least 7 mm, and most preferably at least 10 mm.

In an embodiment 7 according to the invention, the chocolate product is configured according to embodiment 6, wherein the hole is a tunnel. wherein the depth is a length of the tunnel through the chocolate product.

In an embodiment 8 according to the invention, the chocolate product is configured according to embodiment 6, wherein the hole is a recess.

In an embodiment 9 according to the invention, the chocolate product is configured according to one of embodiments 1 to 8, wherein the chocolate product is composed of a chocolate mass to at least 50 wt%, preferably to at least 60 wt%, more preferably to at least 70 wt%, more preferably to at least 80 wt%, more preferably to at least 90 wt%, even more preferably to at least 95 wt%, most preferably to at least 98 wt%, based in each case on the total weight of the chocolate product, wherein the chocolate mass comprises a total fat content, wherein the total fat content comprises one or more fatty acid residues, each of which

> a. has no double bond, and
> b. comprises a number of C atoms per fatty acid residue in the range of 12 to 24,

to a total content in the range of 40 to 75 wt%, preferably 45 to 70 wt%, more preferably 50 to 65 wt%, based in each case on the total fat content. In a preferred embodiment, the total fat content comprises one or more fatty acid residues, each of which has no double bond, and comprises a number of C atoms per fatty acid residue in the range of 12 to 24, to a total content in the range of 57 to 67 wt%, based on the total fat content.

In a further preferred embodiment, the total fat content comprises one or more fatty acid residues, each of which has no double bond, and comprises a number of C atoms per fatty acid residue in the range of 12 to 24, to a total content in the range of 50 to 60 wt%, based on the total fat content. In a further preferred embodiment, the total fat content comprises one or more fatty acid residues, each of which has no double bond, and comprises a number of C atoms per fatty acid residue in the range of 16 to 24, to a total content in the range of 30 to 70 wt%, more preferably 35 to 65 wt%, more preferably 40 to 60 wt%, and most preferably 45 to 58 wt%, based on the total fat content. In a further preferred embodiment, the total fat content comprises one or more fatty acid residues, each of which has no double bond, and comprises a number of C atoms per fatty acid residue in the range of 16 to 20, to a total content in the range of 30 to 70 wt%, more preferably 35 to 65 wt%, more preferably 40 to 60 wt%, and most preferably 43 to 60 wt%, based on the total fat content. In a further preferred embodiment, the total fat content comprises one or more fatty acid residues, each of which has no double bond, and comprises a number of C atoms per fatty acid residue in the range of 16 to 18, to a total content in the range of 30 to 70 wt%, more preferably 35 to 65 wt%, more preferably 40 to 60 wt%, and most preferably 43 to 60 wt%, based on the total fat content.

In an embodiment 10 according to the invention, the chocolate product is configured according to embodiment 9, wherein the total fat content comprises one or more fatty acid residues having a number of C atoms per fatty acid residue in the range of 4 to 10 to a total content of less than 5 wt%, preferably less than 4 wt%, more preferably less than 3 wt%, based in each case on the total fat content.

In an embodiment 11 according to the invention, the chocolate product is configured according to embodiment 9 or 10, wherein the total fat content comprises one or more fatty acid residues with at least one double bond per fatty acid residue to a total content in the range of 20 to 60 wt%, preferably 25 to 55 wt%, more preferably 30 to 50 wt%, based in each case on the total fat content. In a preferred embodiment, the total fat content comprises one or more fatty acid residues with at least one double bond per fatty acid residue to a total content in the range of 30 to 45 wt%, based on the total fat content. In a further preferred embodiment, the total fat content comprises one or more fatty acid residues with at least one double bond per fatty acid residue to a total content in the range of 35 to 50 wt%, based on the total fat content. Fatty acid residues with at least one double bond per fatty acid residue are also referred to as unsaturated.

In an embodiment 12 according to the invention, the chocolate product is configured according to one of embodiments 9 to 11, wherein the total fat content comprises one or more fatty acid residues without a double bond to a total content in the range of 40 to 80 wt%, preferably 45 to 75 wt%, more preferably 50 to 70 wt%, based in each case on the total fat content. In a preferred embodiment, the total fat content comprises one or more fatty acid residues without a double bond to a total content in the range of 55 to 75 wt%, based on the total fat content. In a further preferred embodiment, the total fat content comprises one or more fatty acid residues without a double bond to a total content in the range of 50 to 65 wt%, based on the total fat content. Fatty acid residues without a double bond are also referred to as a saturated.

In an embodiment 13 according to the invention, the chocolate product is configured according to one of embodiments 9 to 12, wherein the chocolate mass, according to the first differential scanning calorimetry described herein, shows a maximum at a temperature in the range of 25 to 29°C, preferably 26 to 28.8°C, more preferably 27 to 28.5°C, and most preferably 27 to 28.3°C.

In an embodiment 14 according to the invention, the chocolate product is configured according to one of embodiments 9 to 13, wherein the chocolate mass, according to the first differential scanning calorimetry described herein, shows a melting enthalpy in the range of 5 to 30 J/g. In an embodiment, the melting enthalpy, according to the first differential scanning calorimetry described herein, is preferably in the range of 5 to 20 J/g, more preferably 7 to 15 J/g. In a further preferred embodiment, the melting enthalpy, according to the first differential scanning calorimetry described herein, is preferably in the range of 10 to 30 J/g, more preferably 15 to 25 J/g, and most preferably 17 to 25 J/g.

In a further preferred embodiment, the chocolate mass, according to the second differential scanning calorimetry described herein, shows a melting enthalpy in the range of 2 to 20 J/g, preferably 3 to 15 J/g, more preferably 5 to 12 J/g.

In an embodiment 15 according to the invention, the chocolate product is configured according to one of embodiments 9 to 14, wherein the total fat content comprises one or more fat molecules with at least one oleic acid residue to a total content in the range of 50 to 80 wt%, preferably 55 to 75 wt%, more preferably 60 to 72 wt%, and most preferably 62 to 70 wt%, based in each case on the total fat content. The remaining fatty acid residues of the fat molecules with at least one oleic acid residue are preferably selected from the group composed of one or two palmitic acid residues, a linoleic acid residue, and one or more stearic acid residues, or a mixture of at least two thereof. Preferably, the fat molecules with at least one oleic acid residue are selected from the group composed of fat molecules with the following combinations of fatty acid residues: POS, SOS, POP, SOO, POO, PLO and OOO, wherein O stands for oleic acid residue, P for palmitic acid residue, L for linoleic acid residue and S for stearic acid residue.

In an embodiment 16 according to the invention, the chocolate product is configured according to one of embodiments 9 to 15, wherein the total fat content comprises one or more fat molecules with at least two oleic acid residues to a total content in the range of 3 to 30 wt%, preferably 4 to 25 wt%, more preferably 5 to 20 wt%, based in each case on the total fat content. In a preferred embodiment, the total fat content comprises one or more fat molecules with at least two oleic acid residues to a total content in the range of 3 to 20 wt%, preferably 3 to 15 wt%, and most preferably 4 to 12 wt%, based in each case on the total fat content. In a further preferred embodiment, the total fat content comprises one or more fat molecules with at least two oleic acid residues to a total content in the range of 10 to 30 wt%, preferably 12 to 25 wt%, and most preferably 14 to 20 wt%, based in each case on the total fat content. In the preceding, the remaining fatty acid residue of each fat molecule with at least two oleic acid residues is preferably a palmitic acid residue, a stearic acid residue, or a third oleic acid residue, wherein the above amounts are based on the total of all these fat molecules. Preferably, the fat molecules with at least two oleic acid residues are selected from the group composed of fat molecules with the following combinations of fatty acid residues: SOO, POO, and OOO, wherein O stands for oleic acid residue, P for palmitic acid residue, and S for stearic acid residue.

In an embodiment 17 according to the invention, the chocolate product is configured according to one of embodiments 9 to 16, wherein the total fat content comprises fat molecules with 3 oleic acid residues to a total content in the range of 0.5 to 15 wt%, preferably 0.5 to 12 wt%, more preferably 1 to 10 wt%, based in each case on the total fat content. In a preferred embodiment, the total fat content comprises fat molecules with 3 oleic acid residues to a total content in the range of 4 to 12 wt%, preferably 5 to 10 wt%, more preferably 6 to 9 wt%, based in each case on the total fat content. In a further preferred embodiment, the total fat content comprises fat molecules with 3 oleic acid residues to a total content in the range of 0.5 to 8 wt%, preferably 0.5 to 6 wt%, more preferably 0.5 to 3 wt%, and most preferably 1.0 to 2.5 wt%, based in each case on the total fat content.

In an embodiment 18 according to the invention, the chocolate product is configured according to one of embodiments 9 to 17, wherein the chocolate mass has a viscosity according to the method described herein in the range of 1.5 to 5.0 Pa·s, preferably 1.8 to 4.0 Pa·s, more preferably 2.0 to 3.2 Pa·s, and most preferably 2.2 to 3.0 Pa·s.

In an embodiment 19 according to the invention, the chocolate product is configured according to one of embodiments 9 to 18, wherein the chocolate mass has a yield point according to the method described herein in the range of 20 to 70 Pa. In a preferred embodiment, the chocolate mass has a yield point according to the method described herein in the range of 20 to 40 Pa, more preferably 22 to 35 Pa, and most preferably 25 to 33 Pa. In a further preferred embodiment, the chocolate mass has a yield point according to the method described herein in the range of 40 to 65 Pa, more preferably 45 to 65 Pa, and most preferably 50 to 60 Pa.

In an embodiment 20 according to the invention, the chocolate product is configured according to one of embodiments 9 to 19, wherein the total fat content is in the range of 25 to 60 wt%, preferably 30 to 55 wt%, more preferably 35 to 50 wt%, and most preferably 38 to 45 wt%, based in each case on the total weight of the chocolate mass.

In an embodiment 21 according to the invention, the chocolate product is configured according to one of embodiments 9 to 20, wherein the total fat content according to the method described herein has a solid fat content at 20°C in the range of 25 to 55 wt%, preferably 28 to 50 wt%, more preferably 30 to 48 wt%, based in each case on the total fat content.

In an embodiment 22 according to the invention, the chocolate product is configured according to one of embodiments 9 to 21, wherein the total fat content according to the method described herein has a solid fat content at 28°C in the range of 5 to 24 wt%, preferably 6 to 20 wt%, more preferably 6 to 18 wt%, based in each case on the total fat content.

In an embodiment 23 according to the invention, the chocolate product is configured according to one of embodiments 9 to 22, wherein the total fat content comprises at least

A) a first fat component to a content in the range of 15 to 40 wt%, preferably 15 to 35 wt%, more preferably 15 to 30 wt%, and

B) a second fat component, different from the first fat component ,to a content in the range of 5 to 30 wt%, preferably 10 to 25 wt%, more preferably 10 to 20 wt%, and most preferably 12 to 18 wt%,

based in each case on the total weight of the chocolate mass. Preferably, the first fat component is a cocoa butter component or a cocoa butter equivalent component or a mixture of the two. Preferably, the second fat component is a milk fat component. A preferred milk fat component is a component of a crystallized-out milk fat. A preferred crystallized-out milk fat is a clarified butter or a butter oil or both.

In an embodiment 24 according to the invention, the chocolate product is configured according to embodiment 23, wherein the total fat content additionally comprises a third fat component different from the first fat component and the second fat component to a content in the range of 1 to 20 wt%, preferably 2 to 15 wt%, more preferably 3 to 10 wt%, based in each case on the total weight of the chocolate mass. Preferably, the third fat component is a proportion of oil.

A contribution to achieving at least one of the objects of the invention is provided by an embodiment 1 of a use 1 of a 3D printer for printing a chocolate mass to obtain a chocolate finished product, wherein the chocolate mass comprises a total fat content, wherein the total fat content comprises one or more fatty acid residues, each of which

a. has no double bond, and
b. comprises a number of C atoms per fatty acid residue in the range of 12 to 24,

to a total content in the range of 40 to 75 wt%, preferably 45 to 70 wt%, more preferably 50 to 65 wt%, based in each case on the total fat content. A preferred 3D printer is the 3D printer 1 or 2 according to the invention. In a preferred embodiment, the total fat content comprises one or more fatty acid residues, each of which has no double bond, and comprises a number of C atoms per fatty acid residue in the range of 12 to 24, to a total content in the range of 57 to 67 wt%, based on the total fat content. In a further preferred embodiment, the total fat content comprises one or more fatty acid residues, each of which has no double bond, and comprises a number of C atoms per fatty acid residue in the range of 12 to 24, to a total content in the range of 50 to 60 wt%, based on the total fat content. In a further preferred embodiment, the total fat content comprises one or more fatty acid residues, each of which has no double bond, and comprises a number of C atoms per fatty acid residue in the range of 16 to 24, to a total content in the range of 30 to 70 wt%, more preferably 35 to 65 wt%, more preferably 40 to 60 wt%, and most preferably 45 to 58 wt%, based on the total fat content. In a further preferred embodiment, the total fat content comprises one or more fatty acid residues, each of which has no double bond, and comprises a number of C atoms per fatty acid residue in the range of 16 to 20, to a total content in the range of 30 to 70 wt%, more preferably 35 to 65 wt%, more preferably 40 to 60 wt%, and most preferably 43 to 60 wt%, based on the total fat content. In a further preferred embodiment, the total fat content comprises one or more fatty acid residues, each of which has no double bond, and comprises a number of C atoms per fatty acid residue in the range of 16 to 18, to a total content in the range of 30 to 70 wt%, more preferably 35 to 65 wt%, more preferably 40 to 60 wt%, and most preferably 43 to 60 wt%, based on the total fat content. In a further preferred embodiment of the use 1, the chocolate mass is configured according to one of the embodiments of the printer cartridge according to the invention.

A contribution to achieving at least one of the objects of the invention is provided by an embodiment 1 of a use 2 of a container for 3D printing of chocolate, wherein the container comprises

a) an outer wall,
b) an opening and
c) a chocolate mass

wherein the outer wall at least partially encloses an inner space, wherein the inner space comprises the chocolate mass, wherein the container is configured such that, by exertion of force on the chocolate mass or the outer wall or both, at least part of the chocolate mass can be dispensed from the opening of the container, wherein the chocolate mass comprises a total fat content, wherein the total fat content comprises one or more fatty acid residues, each of which

a. has no double bond, and
b. comprises a number of C atoms per fatty acid residue in the range of 12 to 24,

to a total content in the range of 40 to 75 wt%, preferably 45 to 70 wt%, more preferably 50 to 65 wt%, based in each case on the total fat content. Preferably, the container is a printer cartridge. A preferred printer cartridge is a 3D printer cartridge. A preferred printer cartridge is the printer cartridge of the invention according to one of its embodiments 1 to 18 as described above, wherein in particular the chocolate mass is preferably configured according to one of the embodiments of the printer cartridge according to the invention.

A contribution to achieving at least one of the objects of the invention is provided by an embodiment 1 of a use 3 of an oil in a chocolate mass for 3D printing of chocolate. In general, the oil can be used as such or as an oil portion of an oil-containing component. A preferred oil-containing component is an oil-containing food product. Further information on preferred oil-containing components can be found below. Applicable legal regulations such as the "Regulation on Cocoa and Chocolate Products" ("Cocoa Regulation") in the respective applicable version should be taken into consideration in application of the invention, but do not restrict the invention.

A contribution to achieving at least one of the objects of the invention is provided by an embodiment 1 of a use 4 of a chocolate mass for 3D printing of chocolate, wherein the chocolate mass comprises a total fat content, wherein the total fat content comprises one or more fatty acid residues, each of which

    a. has no double bond, and
    b. comprises a number of C atoms per fatty acid residue in the range of 12 to 24,

to a total content in the range of 40 to 75 wt%, preferably 45 to 70 wt%, more preferably 50 to 65 wt%, based in each case on the total fat content. In a preferred embodiment, the total fat content comprises one or more fatty acid residues, each of which has no double bond, and comprises a number of C atoms per fatty acid residue in the range of 12 to 24, to a total content in the range of 55 to 65 wt%, based on the total fat content. In a further preferred embodiment, the total fat content comprises one or more fatty acid residues, each of which has no double bond, and comprises a number of C atoms per fatty acid residue in the range of 12 to 24, to a total content in the range of 48 to 58 wt%, based on the total fat content. In a further preferred embodiment, the total fat content comprises one or more fatty acid residues, each of which has no double bond, and comprises a number of C atoms per fatty acid residue in the range of 16 to 24, to a total content in the range of 30 to 70 wt%, more preferably 35 to 65 wt%, more preferably 40 to 60 wt%, and most preferably 45 to 58 wt%, based on the total fat content. In a further preferred embodiment, the total fat content comprises one or more fatty acid residues, each of which has no double bond, and comprises a number of C atoms per fatty acid residue in the range of 16 to 20, to a total content in the range of 30 to 70 wt%, more preferably 35 to 65 wt%, more preferably 40 to 60 wt%, and most preferably 43 to 60 wt%, based on the total fat content. In a further preferred embodiment, the total fat content comprises one or more fatty acid residues, each of which has no double bond, and comprises a number of C atoms per fatty acid residue in the range of 16 to 18, to a total content in the range of 30 to 70 wt%, more preferably 35 to 65 wt%, more preferably 40 to 60 wt%, and most preferably 43 to 60 wt%, based on the total fat content. In a further preferred embodiment of the use 4, the chocolate mass is configured according to one of the embodiments of the printer cartridge according to the invention.

Preferred components and elements of an embodiment according to the invention of a category of the invention are also preferred in further embodiments of the other categories of the invention for components and elements that have the same name or are equivalent. In the same manner, preferred features of an embodiment according to the invention of a category of the invention are also correspondingly preferred in further embodiments of the other categories of the invention.

Chocolate mass

Chocolate is generally understood to refer to a foodstuff and luxury product whose essential components are cocoa products and types of sugars, and in the case of milk chocolate, milk products as well. A chocolate mass is an amount of chocolate that is mouldable into a chocolate product. For this purpose, the chocolate mass is preferably at least partially liquefied, but not necessarily completely melted. Preferably, the chocolate mass is not completely melted for moulding. There are numerous types and qualities, forms and flavours of chocolate. For example, a distinction is made among dark chocolate (also referred to as bittersweet, semisweet or gentlemen's chocolate), milk chocolate, which is lighter than dark chocolate, and white chocolate, which is lighter than milk chocolate. Where the terms dark chocolates, milk chocolate and white chocolate are used herein, the chocolate in question should preferably correspond to the respective definition of Appendix 1 of the Cocoa Regulation (KVO, as of January 2004) to §§ 1, 2, 3. Under Item 3 of Appendix 1 of the KVO, dark chocolate is defined, being referred to therein simply as "chocolate". Milk chocolate is defined under Item 4 of Appendix 1 of the KVO, and white chocolate is defined under Item 5. A chocolate for baking and glazing provided with higher fat content is referred to and treated as couverture. All of the above-mentioned chocolate types are preferred for the chocolate mass, the chocolate product and the chocolate finished product of the invention. Particularly preferably, the chocolate mass of the invention is a white chocolate mass or a milk chocolate mass or a mixture thereof, wherein a milk chocolate mass is most preferable. The chocolate mass according to the various categories of the invention preferably comprises at least one selected from the group composed of sugar, cocoa butter, clarified butter, an emulsifier, and whole milk powder, or a combination of at least two thereof, wherein the chocolate mass particularly preferably comprises all of the components listed above. The chocolate mass comprises sugar, in particular saccharose, preferably to a content in the range of 20 to 60 wt%, more preferably 25 to 55 wt%, and most preferably 30 to 50 wt%, based in each case on the weight of the chocolate mass. Alternatively or additionally, the chocolate mass preferably comprises cocoa butter to a content in the range of 8 to 40 wt%, preferably 10 to 35 wt%, and most preferably 12 to 32 wt%, based in each case on the weight of the chocolate mass. Alternatively or additionally, the chocolate mass preferably comprises clarified butter to a content in the range of 3 to 20 wt%, preferably 4 to 18 wt%, and most preferably 5 to 15 wt%, based in each case on the weight of the chocolate mass. Alternatively or additionally, the chocolate mass preferably comprises one or a plurality of emulsifiers to a total content in the range of 0.1 to 1 wt%, more preferably 0.1 to 0.5 wt%, based in each case on the weight of the chocolate mass. A preferred emulsifier is a lecithin. Alternatively or additionally, the chocolate mass preferably comprises whole milk powder to a content in the range of 8 to 35 wt%, more preferably 10 to 30 wt%, and most preferably 14 to 26 wt%, based in each case on the weight of the chocolate mass. Furthermore, the chocolate mass can additionally comprise one or a plurality of flavourings, one or a plurality of spices, cocoa mass or an oil-containing component or a mixture of at least two thereof. Preferred spices are selected from the group composed of hot pepper, cinnamon, hemp, pepper and thyme, or mixtures of at least two thereof.

Oil component/oil

The following information relates both to the proportion of oil of the chocolate mass according to the invention and the use of an oil according to the invention.

In the context of the invention, the chocolate mass preferably comprises an oil-containing component. The chocolate mass thus preferably comprises a proportion of oil. Preferably, the third fat component of the total fat content of the chocolate mass is a proportion of oil. Suitable as an oil or oil-containing component are all oils or oil-containing components that are known to the person skilled in the art and appear to him to be suitable for the use according to the invention. A preferred oil is an edible oil. According to the "Revised Version of the Guidelines for Edible Fats and Oils of the German Food Code" of 3 November 2011 (published in "Textsammlung Lebensmittelrecht" [Collection of Texts on Food Law]; Klein, Raabe, Weiss; Vols 1-5; as of June 2016; published by Prof. Dr. Matthias Horst; Behr's Verlag GmbH & Co. KG; ISBN 978-3-86022-314-7), edible fats and edible oils are derived from the seeds, germs or fruits of plants or from the fatty tissue of farm animals that is considered suitable, including poultry and fish. Edible fats and edible oils are composed almost exclusively of the triglycerides of fatty acids and are virtually water-free. They can contain small amounts of other substances from the starting material, such as phosphatides, waxes, unsaponifiable components, mono- and diglycerides and free fatty acids. Edible fats are solid or semisolid at 20°C. Edible oils are liquid at 20°C. Edible fats and edible oils are of the colours typical of their type and variety. Edible oils are generally clear. Cold-pressed oils can contain sediment (a component inherent to the plant). A particularly preferred edible oil is a vegetable edible oil or a vegetable oil.

As a rule, vegetable edible fats are named according to their botanical origin, such as coconut fat. The botanical names are also commonly used in cases where the vegetable edible fat contains a maximum of 2 wt% of vegetable edible fats of other botanical origin for technological reasons. As a rule, vegetable edible oils are named according to their botanical origin, for example rapeseed oil. These botanical names are also commonly used in cases where the vegetable edible oil contains a maximum of 2 wt% of vegetable edible oils of other botanical origin for technological reasons. Mixtures of vegetable edible fats and/or vegetable edible oils of differing botanical origin are referred to as vegetable fat or vegetable oil. They can also be designated by naming their botanical origins or their intended application. The above information on oils and fats is taken from "Textsammlung Lebensmittelrecht"; Klein, Raabe, Weiss; Vols 1-5; as of June 2016; published by Prof. Dr. Matthias Horst; Behr's Verlag GmbH & Co. KG; ISBN 978-3-86022-314-7; 5211: "Revised Version of the Guidelines for Edible Fats and Oils of the German Food Code" of 3 November 2011.

Irrespective of the above-cited "Revised Version of the Guidelines for Edible Fats and Oils of the German Food Code" (from which olive oil is excepted), preferred vegetable oils are hazelnut oil, almond oil, rapeseed oil, flax oil, soy oil, olive oil, sunflower oil, sesame oil, safflower oil, peanut oil, coconut oil, walnut oil, poppy seed oil, wheat germ oil, cottonseed oil, babassu fat, grapeseed oil, corn oil, palm oil and rice bran oil. A preferred vegetable oil is a nut oil, wherein hazelnut oil and almond oil are preferred nut oils and hazelnut oil is a very particularly preferred oil in the context of the invention. Particularly preferably, the third fat component is a proportion of hazelnut oil. A preferred oil-containing component is an oil-containing paste. A preferred paste comprises the above seeds, germs or fruits of plants or mixtures thereof in pounded, ground, crushed or comminuted form. According to "Textsammlung Lebensmittelrecht"; Klein, Raabe, Weiss; Vols 1-5; as of June 2016; published by Prof. Dr. Matthias Horst; Behr's Verlag GmbH & Co. KG; ISBN 978-3-86022-314-7; 7325: "ALS Statements on Oil Seeds and Masses and Sweets Produced Therefrom", "Application of the Guidelines of the German Food Code for Oil Seeds and Masses and Sweets Produced Therefrom (No. 2014/11)", "Decision," despite their botanical classification, "nuts", the generic term in general colloquial use, is also understood to refer for example to almonds, pistachio nuts, Brazil nuts, peanuts, and cashews.

Irrespective of the above distinction between edible oils and edible fats, butter and margarine are also suitable for the oil component of the chocolate mass according to the invention and for the inventive use of an oil according to the invention.

### Fatty acid residues

In the context of the invention, a palmitic acid residue is a residue of a palmitic acid. According to the invention, the term palmitic acid includes the fatty acids with the trivial names palmitic acid, isopalmitic acid, 15-methylpalmitic acid and 14-methylpalmitic acid, wherein the acids with the trivial names palmitic acid and isopalmitic acid are preferred and the acid with the trivial name palmitic acid is particularly preferred. The acid with the trivial name isopalmitic acid has the chemical name hexadecanoic acid and the symbol 16:0 (16 C atoms and 0 double bonds per acid residue). The acid with the trivial name palmitic acid has the chemical name 14-methylpen-tadecanoic acid and the symbol 16:0 (iso). The acid with the trivial name 15-methylpalmitic acid has the chemical name 15-methylhexadecanoic acid and the symbol 17:0 (iso) (17 C atoms and 0 double bonds per acid residue). The acid with the trivial name 14-methylpalmitic acid has the chemical name 14-methylhexadecanoic acid and the symbol 17:0 (anteiso) (17 C atoms and 0 double bonds per acid residue). In the context of the invention, a stearic acid residue is a residue of a fatty acid with the trivial name stearic acid. The chemical name of stearic acid is octadecanoic acid, and its symbol is 18:0 (18 C atoms and 0 double bonds per acid residue). In the context of the invention, an oleic acid residue is a residue of a fatty acid with the trivial name oleic acid. The chemical name of oleic acid is $\Delta$9cis-octadecanoic acid, and its symbol is 18:1 (18 C atoms and 1 double bond per acid residue). The above information on fatty acids and fatty acid residues is taken from "Textsammlung Lebensmittelrecht"; Klein, Raabe, Weiss; Vols 1-5; as of June 2016; published by Prof. Dr. Matthias Horst; Behr's Verlag GmbH & Co. KG; ISBN 978-3-86022-314-7; 5211: "Revised Version of the Guidelines for Edible Fats and Oils of the German Food Code" of 3 November 2011.

### Chocolate product

A chocolate product is a body composed to at least 25 wt%, based on the total weight of the chocolate product, of a chocolate mass. This includes chocolate finished products and semifinished products. A chocolate finished product is a moulded body that is suitable for immediate consumption by the end customer without further processing steps. The shape, colour, surface characteristics, haptics and taste of the chocolate finished product are thus preferably not further modified prior to consumption. This is to be distinguished from semifinished products that are to be subjected to further processing into an end product. As a rule, such further processing comprises at least one modification of a form of the product or item produced. For example, however, preferred chocolate finished products are not exhaustively candy, chocolate sweets, chocolate figures, chocolate bars and chocolate hollow bodies.

### 3D printer

3D printing is a generative production method, referred to as additive production according to its construction principle. Accordingly, a 3D printer is a device for 3D printing. A chocolate mass to be printed is preferably supplied in a printer cartridge to a 3D printer for the 3D printing of chocolate. The device in the context of the invention is preferably a 3D printer. The chocolate mass is preferably at least partially liquefied in the 3D printer and/or the printer cartridge, wherein the chocolate mass is preferably not completely melted, and moulded by means of a nozzle. By means of an outlet opening, the nozzle can dispense the chocolate mass in strand form or in portions, for example as droplets, onto a substrate.

A preferred 3D printer comprises a temperature setting device. In the context of the invention, in particular the device according to the invention, a temperature setting device is a device that is suitable for setting a temperature of the chocolate mass. This setting can comprise cooling and/or warming. The setting preferably comprises heating, but no active cooling. A preferred temperature setting device is a heating device. A heating device preferably comprises an electrically heatable element, for example a heating coil. Preferably, setting the temperature of the chocolate mass does not comprise any tempering within the meaning of chocolate production, in particular setting of a degree of crystallization of the chocolate mass, in particular a beta-5 crystal component. This tempering within the meaning of chocolate production is known in the prior art and is ordinarily carried out as complete melting of the chocolate mass and subsequent cooling for crystallization. Only after this cooling, in the case of tempering in the 3D printer, can the chocolate mass be heated to the moulding temperature. Such tempering preferably does not take place in the 3D printer according to the invention and/or the device according to the invention.

A further preferred 3D printer alternatively or additionally comprises a data processing device. This preferably allows a computer-controlled movement through the outlet opening of the nozzle, or a computer-controlled dispensing of the chocolate mass from the outlet opening, or both according to the method of the invention. As a data processing device of the device according to the invention, any data processing device is suitable that appears to the person skilled in the art to be suitable for the use according to the invention, in particular for the processing of the digital data sets with the model of the chocolate finished product. The data processing device preferably issues control instructions for driving a drive unit. Preferably, the data processing device is connected to the drive unit in a signal-transmitting manner. Accordingly, the device and/or the 3D printer according to the invention preferably comprise(s) the drive unit. A preferred drive unit comprises an actuator or a motor, or both. A preferred motor is a stepper motor. Furthermore, the drive unit preferably comprises a gearbox. A preferred data processing device is an electronic data processing device. A preferred data processing device is a computer. The computer comprises a processor, preferably a CPU (central processing unit). A preferred computer is a microcontroller. Further preferably, the data processing device is configured to process the digital data set according to an algorithm. Preferably, the data processing device further comprises a data storage unit. The algorithm can preferably be carried out by software stored on the data storage unit. A preferred data storage unit is a working memory or a main memory, or both.

Substrate

According to the method of the invention, a substrate is layered with the chocolate mass to obtain a chocolate moulded body. The chocolate mass is preferably applied to the substrate. In general, any means appearing to the person skilled in the art to be suitable for use according to the invention may be used as substrate. According to the invention, the substrate is preferably configured to be flat and smooth. However, a three-dimensionally shaped substrate, which for example can constitute a supporting structure, is also conceivable.

Hole

A hole can be a recess or a tunnel. A recess comprises an entrance surface, wherein the entrance surface is immaterial, and an end surface, wherein the end surface is a surface of the chocolate product. A tunnel comprises an entrance surface, wherein the entrance surface is immaterial, and an end surface, wherein the end surface can be immaterial or a surface of the chocolate product. In this manner, a tunnel can run through the chocolate product, i.e. can comprise an entrance and an exit. Furthermore, a tunnel can comprise an entrance and end in the chocolate product.

Model of the chocolate finished product

A preferred digital data set on a chocolate finished product comprises a model of the chocolate finished product. Any model appearing to the person skilled in the art to be suitable for use according to the invention may be used as model. The model is preferably a CAD model. CAD stands for computer-aided design, i.e. computer-supported design. In this connection, computer aided means carried out by means of EDP (electronic data processing).

MEASUREMENT METHODS

The following measurement methods were used in the context of the invention. Unless otherwise specified, the measurements were carried out at an ambient temperature of 25°C, an ambient air pressure of 100 kPa (0.986 atm) and a relative humidity of 50%.

Differential scanning calorimetry

Differential scanning calorimetry (DSC) is carried out with the following devices and consumable materials from Perkin Elmer LAS:

Aluminium lid and pan,
DSC 8500 with autosampler,
cooler Intracooler 2, and
universal sealing press BO13-9005.

For the evaluation, DSC software (Pyris from Perkin Elmer) is used with the basic settings. No smoothing or other curve adaptation is carried out. The following temperature-time profiles are used for the various measurement methods.

First differential scanning calorimetry:

1. Maintenance of the chocolate mass at a temperature of 20°C for 1 min,
2. Heating of the chocolate mass from 20 to 45°C at a rate of 3°C/min, and
3. Maintenance of the chocolate mass at a temperature of 45°C for 1 min.

Second differential scanning calorimetry:

1. Maintenance of the chocolate mass at a temperature of 27°C for 15 min,
2. Heating of the chocolate mass from 27 to 45°C at a rate of 3°C/min, and
3. Maintenance of the chocolate mass at a temperature of 45°C for 1 min.

Melting enthalpy $\Delta H$

For determination of the melting enthalpy, the first differential scanning calorimetry is carried out as described above, and the melting enthalpy $\Delta H$ is determined by evaluation with the DSC software (Pyris from Perkin Elmer).

Viscosity $\eta$ and yield point $\tau_0$

Viscosity and yield point are determined with a Rheometer MCR 301 from Anton Paar GmbH, Graz, Austria. For this purpose, the following 4 sections are successively carried out with the parameters indicated in the following table.

| Section | Duration [s] | Shear rate [1/s] | Number of measuring points |
|---|---|---|---|
| 1. Pre-shearing | 2.4 | 5 | / |
| 2. Increase in rpm | 100 to 0.1 | 0.1 to 100 | 10 |
| 3. Stopping phase | 10 | 100 | 6 |
| 4. Reduction of rpm | 0.1 to 100 | 100 to 0.1 | 60 |

Here, section 1 involves only pre-shearing and is not recorded. Only section 4 is used for the evaluation. Viscosity ($\eta$) and yield point ($\tau_0$) are determined according to IOCCC/Windhab 2000 at 29°C.

Solid fat content $SFC_T$

The solid fat content is determined by means of NMR according to DIN EN ISO 8292-1. For this purpose, the chocolate mass is stored prior to measurement for 24 h at a storage temperature T. In this document, T is 20°C or 28°C and is included in indication of the solid fat content. Calculation of the solid fat content (SFC) is carried out according to Ziegleder G., Schwings-handl I., Brulheide M. (1998): Assessment of stored chocolates using nuclear magnetic resonance (NMR). Sweets (7-8): 30-34. The following formula is used:

$$SFC_T = SFC^*_T - SFC^*_{40}/(100 - SFC^*_{40}) \cdot 100 \ [\%]$$

wherein values marked with * are measured parameters. $SFC_T$ is the solid fat content at the storage temperature T, and $SFC_{40}$ is the solid fat content at 40°C.

Fatty acid residue spectrum

The amounts of the fatty acid residues in the total fat content of the chocolate mass are determined by a method derived from §64 LFGB (Lebensmittel- und Futtermittelgesetzbuch)(in English: Foods, Consumer Goods and Feedstuffs Code), more specifically L 13.00-27/3. In this method, the sample is melted and thoroughly homogenised. 30 mg of the sample is then weighed in and the fat content is extracted with n-hexane. The extract is removed and evaporated to dryness with nitrogen. The residue is taken up with ether, and methanolic trimethylsulfonium hydroxide solution is added for derivatization. The fatty acid methyl esters produced are then examined by gas chromatography (GC-FID - gas chromatography with flame ionization detector). A spectrum of the fatty acid residues contained in the total fat content is determined, wherein the fatty acid residues are indicated in the form x:y. Here, x is a natural number that indicates the number of C atoms in the fatty acid residue and y is a natural number (with 0) that indicates the number of double bonds in the fatty acid residue.

Triglyceride distribution

The method for determination of triglycerides is derived from §64 LFGB, more specifically L 13.00-27/3. In this method, the sample is melted and thoroughly homogenized. 30 mg of the sample is then weighed in and the fat content is extracted with n-hexane. The extract is removed and evaporated to dryness with nitrogen. The residue is taken up with HPLC mobile phase (acetonitrile-ether mixture) and diluted. The solution obtained is tested for its triglyceride composition by liquid chromatography (HPLC-ELSD).

Total fat content

The total fat content of a chocolate mass is determined according to the method L 44.00-4 December 1985 from the Official Collection of Test Methods according to § 35 LMBG (Lebensmittel- und Bedarfsgegenständegesetz) (in English: German Food and Commodities Law) "Testing of Foodstuffs-Determination of the Total Fat Content in Chocolate". The percentage by weight w is determined according to equation (1) of the method and indicated as the total fat content in wt% (1 g/100 g corresponds to 1 wt%).

Temperature measurement

The temperature of the chocolate masses is measured in the examples and comparative examples using a P750 handheld measuring device from ATP Messtechnik GmbH, Ettenheim, Germany. For this purpose, the device is used with a resistance temperature probe model Pt100 (platinum measuring resistance), distributed by the same manufacturer as an immersion probe with a handle, mineral-insulated (sensor class 1/3 according to DIN, WS 1.4571, Article No. 6000-1023, $t_{90}$ according to manufacturer at 5 s). The measuring accuracy of this device configuration according to the manufacturer is $\pm$ 0.03°C in the measuring range of -50 to +199.99°C. In order to achieve this measuring accuracy, the handheld measuring device must firstly be calibrated with the exact probe to be used in order to compensate for the probe tolerance. The probe bears a numerical code for this purpose. This code contains information on the deviation of the probe at the zero point and the slope with respect to the respective standard or characteristic curve taken as a basis. Via the control panel of the P750 handheld measuring device, the numerical code is input into the measuring device and deposited in the storage unit. The processor of the device corrects the tolerance of the measuring probe defined by the numerical code and corrects the measurement error resulting therefrom. The corrected measurement value is displayed on the LCD. For calibration, only references are used the maximum error of which is smaller by a factor of 3 than the error margin specified for the respective device. In the examples and comparative examples, measurement is carried out immediately before printing. For this purpose, the tip of the syringe containing the chocolate mass is removed, the tip of the measuring probe, which has a diameter of only 1.5 mm, is introduced into the syringe approximately to the centre of the chocolate mass, a period of 10 s is allowed to elapse, and the temperature value displayed on the device is read off.

The invention is presented in further detail in the following by means of examples and drawings, wherein the examples and drawings are not to be construed as limiting the invention. Unless otherwise indicated, the drawings are not to scale.

Production of the chocolate masses according to the invention

A white chocolate mass and a milk chocolate mass were first produced. Both masses are configured according to the invention. The following formulations were used.
White chocolate mass:

- 90 g white chocolate, commercially available from the firm Barry Callebaut, composed of sugar, cocoa butter, whole milk powder and an emulsifier (sunflower lecithin);
- 10 g clarified butter

Milk chocolate mass:

- 34.58 g sugar;
- 19.57 g whole milk powder;
- 15.51 g cocoa butter;

- 9.99 g hazelnut paste;
- 8.99 g cocoa mass;
- 8.92 g clarified butter;
- 2.00 g lactose;
- 0.24 g emulsifier (sunflower lecithin);
- 0.2 g vanilla flavour

The following devices were used for producing the white chocolate and the milk chocolate:

- Kneader:

    Name: Beetz, Double-Z Kneader No. 1158 UMK25,
    Capacity: 25 kg

- Roll mill:
    Name: Bühler, Hydraulic Universal Three Roll Mill model SDH
- Conche

    Name: Petzholdt, model PVW-75,
    Capacity: 75 kg

- Marble table
- Scoop and spatula

Production of milk chocolate:

According to the amounts indicated above for the milk chocolate formulation, sugar, whole milk powder, lactose, clarified butter and hazelnut paste were weighed and kneaded in a kneader into a homogeneous mass. The homogeneously kneaded mass was finely milled in the roll mill to an average particle size of 25 $\mu$m. The finely milled powder obtained in this manner was dry-conched for 6 hours in the conche. After dry conching, cocoa butter and lecithin were added and stirred for 15 minutes. After stirring, the refining and homogenisation process was carried out for 6 hours. After homogenization, cocoa butter and lecithin were again added, as well as natural vanilla flavour to round out the taste, such that the total consumption of these ingredients corresponds to the amounts indicated above in the formation. The mass was stirred for an additional 30 minutes. The mass was then pre-crystallized according to the method described below.

Production of the white chocolate:

The white chocolate CHW-S29e4E-UTZ-213 purchased from the firm Barry Callebaut in pellet form was melted in a water bath at 45°C. The clarified butter was stirred into the melted white chocolate according to the amounts given in the above formulation. The mass was then pre-crystallized according to the method described below.

Pre-crystallization of the white chocolate and the milk chocolate:

Pre-crystallization means that the chocolate is subjected to a thermocyclic method. For this purpose, 2/3 of the mass of melted chocolate heated to 45°C was placed on the marble table. This mass was thoroughly spread out several times with a spatula while being repeatedly sheared until the mass was soft and had reached a temperature of approx. 26 to 27°C. This pre-crystallized mass was added to the remaining non-pre-crystallized third of the chocolate, which was still at a temperature of 45°C, and the masses were thoroughly mixed. The treated mass obtained was characterized as described below or filled into printer cartridges.

Characterisation of the chocolate masses produced as described above

The white chocolate mass and milk chocolate mass produced as described above were characterized as follows according to the measurement methods contained herein. The white chocolate mass has a total fat content of 42 wt% and the milk chocolate mass a total fat content of 41 wt%, based in each case on the total chocolate mass.

Fatty acid spectrum:

| Fatty acid residues | Amount in total fat content of milk chocolate mass [wt%] | Amount in total fat content of white chocolate mass [wt%] |
|---|---|---|
| (12 to 24):0 | 54.6 | 61.8 |
| (16 to 24):0 | 48.1 | 54.0 |
| (16 to 20):0 | 47.9 | 53.8 |
| (16 to 18):0 | 47.9 | 53.8 |
| (4 to 10):y where $y \geq 0$ | 2.0 | 2.3 |

Triglyceride distribution:

| Fatty acid molecule/ triglyceride | Amount in total fat content of milk chocolate mass [wt%] | Amount in total fat content of white chocolate mass [wt%] |
|---|---|---|
| At least 1 O per fatty acid molecule | 67.6 | 65.9 |
| At least 2 O per fatty acid molecule | 16.1 | 8.3 |
| At least 3 O per fatty acid molecule | 7.2 | 1.6 |
| where O = oleic acid residue | | |

Solid fat content $SFC_T$:

| | Milk chocolate mass | White chocolate mass |
|---|---|---|
| Solid fat content $SFC_T$ at 28°C [wt%] | 9.1 | 15.5 |
| Solid fat content $SFC_T$ at 20°C [wt%] | 33.5 | 44.3 |

Differential scanning calorimetry (DSC):

| | Milk chocolate mass | White chocolate mass |
|---|---|---|
| Melting peak according to the first DSC [°C] | 27.52 | 28.0 |
| Melting peak according to the second DSC [°C] | 28.87 | 29.12 |
| Melting enthalpy $\Delta H$ according to the first DSC [J/g] | 13.4 | 21.9 |

Rheology:

| | Milk chocolate mass | White chocolate mass |
|---|---|---|
| Viscosity $\eta$ [Pa·s] | 2.54 | 2.45 |
| Flow point $\tau_0$ [Pa] | 29.5 | 55.50 |

Furthermore, the white chocolate and the milk chocolate produced as described above were subjected to taste and sensory testing according to the testing scheme for sweets (chocolate, foamed products, sweets from oil seeds, dragées, pralines; Product No. 41100-49300) of the DLG (German Agricultural Society). For this purpose, the respective chocolates according to the invention were compared with commercially available chocolates. The test was carried out by 3 accredited DLG testers. The following testing scheme items were assessed (numbering according to testing scheme):

   3. Bite, chewing impression

   4. Aroma

   5. Taste

Assessment was carried out according to the following numerical scale of the DLG.

| Score | Quality description | General properties |
|---|---|---|
| 5 | Very good | No deviation from quality expectations |
| 4 | Good | Minimal deviations |
| 3 | Satisfactory | Slight deviations |
| 2 | Less satisfactory | Clear deviations |
| 1 | Unsatisfactory | Strong deviations |
| 0 | Inadequate | Not evaluable |

The following results were achieved for the milk chocolates.

| Sample no. | Sample name | Score achieved |
|---|---|---|
| 1A | Milk chocolate according to the invention | 5 |
| 2A | Milka Noisette, Mondelez International (not according to the invention) Use-by date 28.09.2017/ Lot 00A0565222-12 15:15 | 5 |
| 3A | Fin Carré Noisette, Lidl (not according to the invention) Use-by date 28.12.2017/ Lot L7032A123 16:29 | 5 |

The following results were achieved for the white chocolates.

| Sample no. | Sample name | Score achieved |
|---|---|---|
| 1B | White chocolate according to the invention | 5 |
| 2B | Milka white chocolate, Mondelez International (not according to the invention) Use-by date 03.01.2018/Lot OPZ0270122 17:57 | 5 |
| 3B | Fin Carré white chocolate, Lidl (not according to the invention) Use-by date 17.03.2018/ Lot L6357A111 01:20 | 5 |

The above test results show that chocolate masses produced and characterized as described above are the same as comparable chocolates (milk chocolate or white chocolate) in the criteria of bite, chewing impression, aroma, and taste.

Printer cartridge and 3D printer

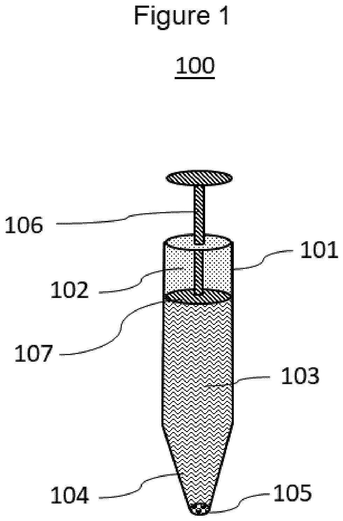

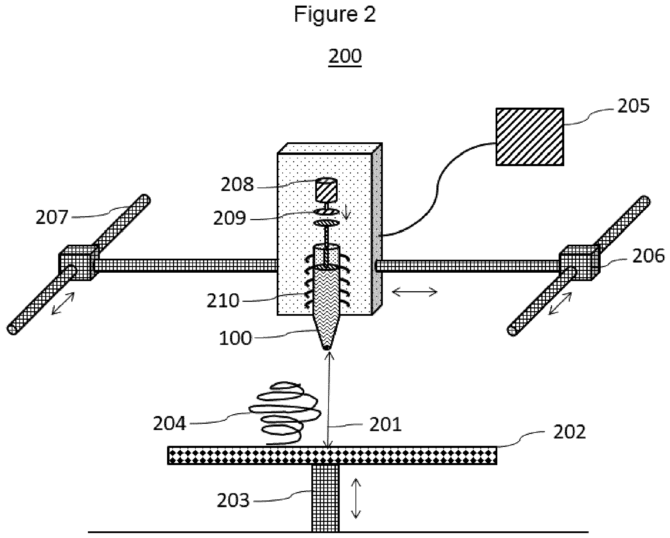

The respective melted chocolate mass is filled in order to produce a printer cartridge. In the case of the above-described chocolate masses according to the invention, the still-liquid masses are filled immediately after pre-crystallization. The above-mentioned commercially available chocolates are first comminuted so that they can be dosed as described below. 25 g of the respective mass is filled into a 30 ml syringe commercially available from Amefa GmbH. Care must be taken to ensure that the filled syringe is closed with the piston in such a way that to the greatest extent possible, the plunger of the piston comes to rest free of air against the mass, thus obtaining a printer cartridge as shown in Fig. 1. The printer cartridges are then used in a specially-designed 3D printer, which is shown schematically in Fig. 2. The respective printer cartridge is first introduced into a preheating shaft, not shown in Fig. 2. In this shaft, the filled printer cartridge is preheated until the temperature in the printer cartridge is homogeneously distributed. For this purpose, the cartridge remains in the preheating shaft for at least 60 min. For the individual examples and comparative examples, the temperature of the preheating shaft is indicated in the table below as the preheating temperature. Here, the maximum residence time of the printer cartridges in the preheating shaft is limited to 150 min. After preheating, the printer cartridge is removed from the preheating shaft, and the above-described measurement of the moulding temperature is carried out immediately. Immediately thereafter, the tip of the syringe is replaced, and the printer cartridge is introduced into the receiving shaft of the 3D printer described in Fig. 2 and printing is carried out. The receiving shaft is heated by the heating coil. In the individual examples and comparative examples, the heating coil is set to the temperature indicated in the table below (temperature receiving shaft). Each chocolate product is printed in the shape of a sitting frog. This shape was selected because it was found in the tests conducted on the invention to be particularly challenging. In the table below, for each example and comparative example, the moulding temperature range in which the frog can be favourably printed and the size of this range are indicated. The printing result is assumed to be favourable when the frog obtained is firm and remains stable under optimum storage. If the moulding temperature is below the indicated moulding temperature range (for this purpose, the preheating temperature and the temperature of the heating shaft must optionally be set lower), the chocolate mass will be too solid for printing. If the moulding temperature is above the indicated moulding temperature range (for this purpose, the preheating temperature and the temperature of the heating shaft must optionally be set higher), the printer will not properly build up the individual layers of the chocolate mass, and the mass will tend to melt. The results given in the following table are obtained at a room temperature of approximately 21 to 24°C. If the external temperature deviates sharply, the moulding temperature ranges of the respective masses can also be shifted.

| Sample no. | Preheating temperature [°C] | Temperature of receiving shaft [°C] | Moulding temperature range [°C] | Size of moulding temperature range [°C] |
|---|---|---|---|---|
| 1A (milk chocolate according to the invention) | 28.5 | 29 | 28.2 to 29.0 | 0.8 |
| 2A (milk chocolate not according to the invention) | 30 | 30 | 29.6 to 29.8 | 0.2 |
| 3A (milk chocolate not according to the invention) | 30 | 30 | 30.8 to 31.1 | 0.3 |
| 1B (white chocolate according to the invention) | 29.5 | 29 | 29.7 to 30.2 | 0.5 |
| 2B (white chocolate not according to the invention) | 32 | 32 | 32.7 to 33.0 | 0.3 |
| 3B (white chocolate not according to the invention) | 32 | 31 | 32.4 to 32.8 | 0.4 |

It can be seen from the above table that all of the tested chocolate masses can be favourably printed. Surprisingly, this also applies to the commercially available chocolate masses. Moreover, however, the commercially available chocolates can only be favourably printed in a moulding temperature window that is narrower than that of the chocolate masses produced as described above. Moreover, this moulding temperature window is at higher absolute temperatures for the commercially available chocolates than for the chocolates produced as described above.

As the chocolate masses used above are already pre-crystallized, it is not necessary to remelt them completely in the 3D printer, cool them off for crystallization, and then heat them up again.

Such a pre-crystallization cycle ordinarily comprises heating of the chocolate mass to over 40°C in order to melt it completely and then subsequent cooling to below 15°C. In the above-described printing method, in contrast, the chocolate mass is only heated from room temperature to the respective moulding temperature. As a result, the printing process can be carried out much more rapidly, and the user obtains the desired chocolate product much more quickly. In addition, use of the 3D printer is made easier for the user, and the power consumption of the user's end device is reduced.

3D-printable chocolate masses already known from the prior art are available in printer cartridges in a non-pre-crystallized state. In the prior art, it is assumed that it is technically advantageous to use non-pre-crystallized chocolate masses for 3D printing. As has been seen above, however, pre-crystallized chocolate masses, even commercially available chocolate masses, can also be favourably printed so that a dimensionally-stable and storage-stable product is obtained. As non-pre-crystallized chocolates are used in the prior art for 3D printing, the relevant 3D printer is correspondingly configured so that the printing comprises pre-crystallization in the 3D printer. This leads to longer printing times and higher power consumption. Furthermore, the 3D printers of the prior art must have a complex structure and are thus more expensive in production. In addition, pre-crystallization is a process that must be carried out with a high degree of precision from an artisanal standpoint in order to achieve the desired result. Pre-crystallization affects important properties of the chocolate product such as e.g. lustre, hardness, shrink force and storage stability. If pre-crystallization is carried out automatically in the 3D printer, depending on the environment (ambient temperature, ambient humidity, etc.), fluctuations may occur that can be detrimental to the above properties of the chocolate product. Because no automated pre-crystallization takes place in the 3D printer according to the invention, such fluctuations in quality cannot occur.

Furthermore, the chocolate masses for 3D printing known in the prior art are high-melting chocolates compared to the milk chocolate masses used above. The melting behaviour of the chocolates is substantially determined by their fatty acid spectrum as well as their triglyceride distribution. Furthermore, to the knowledge of the inventor, 3D printing of white chocolate is not known in the prior art. Accordingly, the invention makes 3D printing of white chocolate possible for the first time. Moreover, by means of the method according to the invention, different chocolate masses (for example milk chocolate and white chocolate) can essentially be printed by the same method without retrofitting or reprogramming of the 3D printer. This is not possible with the masses and 3D printers known from the prior art. In this case, the printer and the method must both be adapted to the chocolate mass, which makes handling more complicated and prolongs the period of use. In addition, it has been found in laboratory stability tests that the chocolate 3D printing products obtained according to the invention show less tendency to bloom, i.e. better fat stability, compared to the above-mentioned higher-melting chocolates for 3D printing known in the prior art.

Unless otherwise specified in the description or the respective figures, the figures respectively show the following, schematically and not to scale:

Fig. 1     a printer cartridge according to the invention;
Fig. 2     a device according to the invention;
Fig. 3     a flow chart of a method according to the invention;
Fig. 4a)    a chocolate product according to the invention in a sectional view;
Fig. 4b)    a further chocolate product according to the invention;
Fig. 5     a further chocolate product according to the invention in a sectional view;
Fig. 6     a further chocolate product according to the invention;
Fig. 7a)    a further chocolate product according to the invention in a sectional view; and
Fig. 7b)    a further chocolate product according to the invention.

Fig. 1 shows a printer cartridge 100 according to the invention. The printer cartridge 100 comprises an outer wall 101 of plastic that at least partially encloses an inner space 102. In the inner space 102 is a chocolate mass 103. The printer cartridge 100 is a 3D printer cartridge that is configured for use in a 3D printer 200. For this purpose, a mould of the outer wall 101 is configured as a positive mould with respect to a negative mould formed by a receiving shaft of the 3D printer 200. The printer cartridge 100 comprises a nozzle 104 with a circular outlet opening 105. The outlet opening 105 has an opening area of 1 mm$^2$. The printer cartridge 100 further comprises a piston 106 with a plunger 107. When force is exerted on the piston 106, the plunger 107 can reduce a volume of the inner space 102 such that the chocolate mass 103 is pressed through the outlet opening 105 of the printer cartridge 100. The chocolate mass 103 can thus be dispensed from the printer cartridge 100 in strand form. Accordingly, the printer cartridge 100 is configured according to the principle of a syringe. The chocolate mass 103 comprises a total fat content of 42 wt%, based on the total weight of the chocolate mass 103 of 25 g. The total fat content comprises a plurality of fatty acid residues, each without a double bond, and comprising a number of C atoms per fatty acid residue in the range of 12 to 24, to a total content of 54 wt%, based on the total fat content. Furthermore, the total fat content comprises a plurality of fatty acid residues, each without a double bond, and comprising a number of C atoms per fatty acid residue in the range of 16 to 24, to a total content of 49 wt%, based on the total fat content. The total fat content further comprises a plurality of fatty acid residues, each without a double bond, and comprising a number of C atoms per fatty acid residue in the range of 16 to 20, to a total content of 48 wt%, based on the total fat content. In addition, the total fat content comprises a plurality of fatty acid residues, each without a double bond, and comprising a number of C atoms per fatty acid residue in the range of 16 to 18, to a total content of 48 wt%, based on the total fat content. The total fat content comprises a plurality of fatty acid residues with a number of C atoms per fatty acid residue in the range of 4 to 10 to a total content of 2 wt%, based on the total fat content.

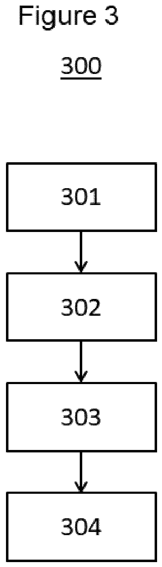

Fig. 2 shows a device 200 according to the invention 200 that is a 3D printer. The 3D printer 200 comprises the printer cartridge 100 according to Fig. 1. The printer cartridge 100 is received in a receiving shaft of the 3D printer 200 in such a way that that the nozzle 104 with the outlet opening 105 is arranged over a substrate 202. The nozzle 104 can be guided by means of a rail system 207, a vertical translation of the substrate 202 by a lifting device 203 (shown by arrows respectively) and motors 206 in such a way that the outlet opening 105 can be moved over the substrate 202 at each point of a three-dimensional working volume. In this manner, chocolate products 400 can be produced with the device 200 in a plurality of moulds, each of which fits into the working volume. Guiding of the nozzle 104 by means of the rail system 207 and dispensing of the chocolate mass 103 from the outlet opening 105 are carried out in a computer-controlled manner by a data processing device 205. The data processing device 205 is conductively connected to a power supply (not shown) and connected in a signal-transmitting manner to the motors 206 and a linear motor 208. In this manner, the data processing device 205 can drive the motors 206 and the linear motor 208. The linear motor 208 comprises a runner 209 that can exert a force on the piston 106 of the printer cartridge 100 so that the chocolate mass 103 can be dispensed from the outlet opening 105 onto the substrate 202. In order to allow the chocolate mass 103 to be set to a moulding temperature for this purpose, the device 200 further comprises a temperature setting device, which comprises a heating coil 210 that is arranged around the receiving shaft such that the chocolate mass 103 can be heated in the printer cartridge 100 received in the receiving shaft. The heating coil 210 is shown here in a sectional view. Furthermore, the data processing device 205 comprises a hard drive on which is stored a digital data set with CAD-models of the plurality of forms of the chocolate products 400. The computer-controlled movement of the outlet opening 105 takes place along a three-dimensional trajectory 204 that lies in the working volume. During the movement along the three-dimensional trajectory 204, a distance 201 between the substrate 202 and the outlet opening 105 increases monotonically. The device 200 is therefore suitable for carrying out the method 300 according to Fig. 3. Furthermore, a chocolate product 400 can be produced with the 3D printer 200 at a printing rate of 0.2 min per g of chocolate mass. The chocolate product 400 can be consumed after printing, i.e. does not need to be further processed or actively cooled. The chocolate product 400 is therefore a chocolate finished product.

Fig. 3 shows a flow chart of a method 300 according to the invention. In a method step a) 301 of the method 300, the device 200 of Fig. 2 and the printer cartridge 100 of Fig. 1 are separately provided. In a subsequent method step b) 302, the printer cartridge 100 is inserted into the receiving shaft of the 3D printer 200. In a method step c) 303, the chocolate mass 103 is set to a moulding temperature, in this case heated, in the printer cartridge 100 by means of the temperature setting device with the heating coil 210. In a method step d) 304, the chocolate mass 103 is moulded at the moulding temperature by means of the piston 106, the plunger 107 and the nozzle 104 with the outlet opening 105 of the printer cartridge and thereby dispensed onto the substrate 202 of the device 200. In this manner, a chocolate finished product is produced on the substrate 202 as a chocolate moulded body. In the method step d) 304, the outlet opening 105 of the nozzle 104 follows a three-dimensional trajectory 204, along which the distance 201 between the substrate 202 and the outlet opening 105 increases monotonically. Furthermore, in method steps b) 302 to d) 304, the chocolate mass 103 is not heated above the moulding temperature of 29°C. Furthermore, a minimum temperature of the chocolate mass 103 in method steps b) 302 to d) 304 is not below 20°C. From method step b) 302 to d) 304, the method 300 comprises no tempering of the chocolate mass 103 within the meaning of chocolate production, i.e. no pre-crystallization of the chocolate mass 103. Rather, the chocolate mass 103 in the printer cartridge 103 is already pre-crystallized in the method step a) 301 so that it has a high beta-5 crystal content.

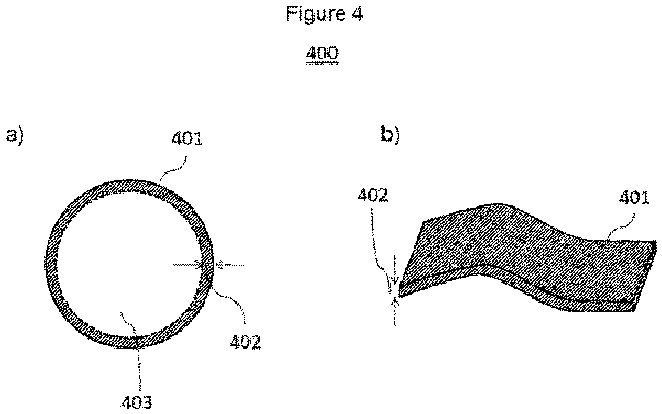

Fig. 4a) shows a chocolate product 400 according to the invention in a sectional view. The chocolate product 400 is a chocolate finished product obtainable by means of the method 300 of Fig. 3. The chocolate product 400 is a chocolate hollow body that is composed of a wall 401. The wall 401 has a wall thickness 402 of 1 mm. The wall completely encloses an inner space 403. The chocolate product 400 is configured as a hollow sphere.

Fig. 4b) shows a further chocolate product 400 according to the invention. This chocolate product 400 is also a chocolate finished product obtainable by means of the method 300 of Fig. 3. The chocolate product 400 is composed of a wall 401 that has a wall thickness 402 of 2 mm. The chocolate product 400 is configured as a waved layer.

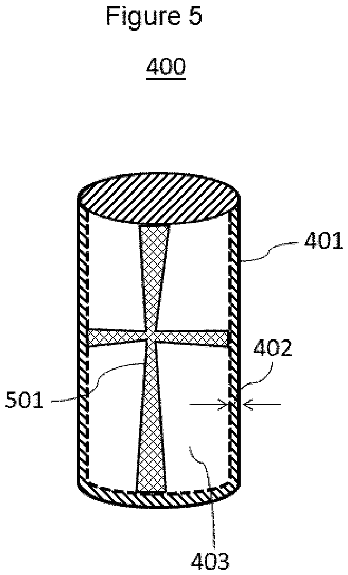

Fig. 5 shows a further chocolate product 400 according to the invention in a sectional view. This chocolate product 400 is also a chocolate finished product obtainable by means of the method 300 of Fig. 3. The chocolate product 400 comprises a wall 301 that has a wall thickness 402 of 1 mm. The wall 401 completely encloses a product inner space 403. The chocolate product 400 is configured as a hollow cylinder closed on its end faces with a supporting structure 501 in the product inner space 403.

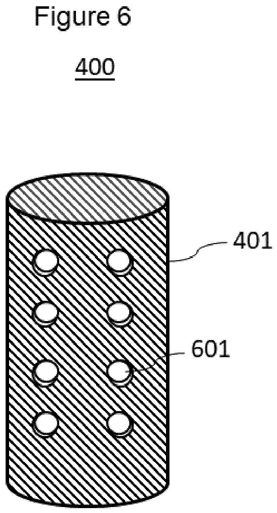

Fig. 6 shows a further chocolate product 400 according to the invention. This chocolate product 400 is also a chocolate finished product obtainable by means of the method 300 of Fig. 3. The chocolate product 400 is composed of a wall 401 that has a wall thickness 402 of 2 mm. The wall 401 completely encloses a product inner space 403. The chocolate product 400 is configured as a hollow cylinder with 8 openings 601 in the wall 401.

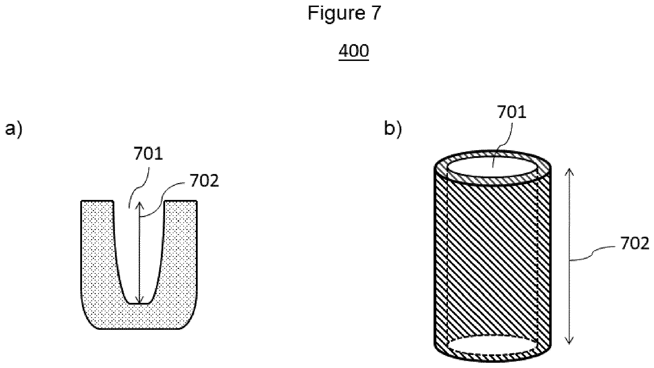

Fig. 7a) shows a further chocolate product 400 according to the invention in a sectional view. This chocolate product 400 is also a chocolate finished product obtainable by means of the method 300 of Fig. 3. The chocolate product 400 comprises a hole 701, wherein the hole 701 has a depth 702 of 10 mm. The hole 701 is a recess. The chocolate product 400 has a trough-shaped configuration.

Fig. 7b) shows a further chocolate product 400 according to the invention. This chocolate product 400 is also a chocolate finished product obtainable by means of the method 300 of Fig. 3. The chocolate product 400 comprises a hole 701, wherein the hole 701 has a depth 702 of 20 mm. The hole 701 is a tunnel that completely penetrates the chocolate product 400. The chocolate product 400 is configured as an open hollow cylinder.

LIST OF REFERENCE NOS.

**[0139]**

| | |
|---|---|
| **100** | Printer cartridge according to the invention |
| **101** | Outer wall |
| **102** | Inner space |
| **103** | Chocolate mass |
| **104** | Nozzle |
| **105** | Outlet opening |
| **106** | Piston |
| **107** | Plunger |
| **200** | Device according to the invention/3D printer according to the invention |
| **201** | Distance between substrate and outlet opening |
| **202** | Substrate |
| **203** | Lifting device |
| **204** | Three-dimensional trajectory |
| **205** | Data processing device |
| **206** | Motor |
| **207** | Rail system |
| **208** | Linear motor |
| **209** | Runner |
| **210** | Heating coil |
| **300** | Method according to the invention |
| **301** | Method step a) |
| **302** | Method step b) |
| **303** | Method step c) |
| **304** | Method step d) |
| **400** | Chocolate product according to the invention |
| **401** | Wall |
| **402** | Wall thickness |
| **403** | Product inner space |
| **501** | Supporting structure |
| **601** | Opening |
| **701** | Hole |
| **702** | Depth |

**Claims**

1. Printer cartridge (100), comprising

    a) an outer wall (101), and
    b) a chocolate mass (103),

wherein the outer wall (101) at least partially encloses an inner space (102),
wherein the inner space (102) comprises the chocolate mass (103),
wherein the chocolate mass (103) comprises a total fat content,
wherein the total fat content comprises one or more fatty acid residues, each of which

    a. has no double bond, and
    b. comprises a number of C atoms per fatty acid residue in the range of 12 to 24,

to a total content in the range of 40 to 75 wt%, based on the total fat content.

2. Printer cartridge (100) according to Claim 1, wherein the chocolate mass (103), according to the first differential scanning calorimetry described herein, shows a maximum at a temperature in the range of 25 to 29°C.

3. Printer cartridge (100) according to Claim 1 or 2, wherein the total fat content comprises one or more fat molecules with at least one oleic acid residue to a total content in the range of 50 to 80 wt%, based on the total fat content.

4. 3D printer (200), comprising the printer cartridge (100) according to one of Claims 1 to 3.

5. Method (300), comprising as method steps

    a) provision of

        i) a device (200) comprising a temperature setting device (210), and
        ii) a container comprising a chocolate mass (103);

    b) bringing the container into contact with the device (200);
    c) setting the chocolate mass (103) by means of the temperature setting device (201) to a moulding temperature; and
    d) moulding the chocolate mass (103) at the moulding temperature by means of a nozzle (104) having an outlet opening (105) by overlaying a substrate (202) with the chocolate mass (103) to obtain a chocolate moulded body, wherein the outlet opening (105) of the nozzle (104) follows a three-dimensional trajectory (204);

wherein the chocolate mass (103), in method steps b) to d), reaches a maximum temperature of not more than 40°C.

6. Method (300) according to Claim 5, wherein the moulding temperature is in the range of 25.0 to 35.0°C.

7. Method according to Claim 5 or 6, wherein the chocolate mass, according to the first differential scanning calorimetry described herein, shows a maximum at a temperature in the range of 25 to 29°C.

8. Method according to Claim 7, wherein the moulding temperature does not deviate more than 2°C from the temperature of the maximum.

9. 3D printer (200), comprising a container,
wherein the container comprises

    a) an outer wall (101),
    b) an opening and
    c) a chocolate mass (103),

wherein the outer wall (101) at least partially encloses an inner space (102),
wherein the inner space (102) comprises the chocolate mass (103),
wherein the container is arranged and configured such that by exertion of force on the chocolate mass (103) or the outer wall (101) or both, at least part of the chocolate mass (103) can be dispensed from the opening of the container,
wherein the chocolate mass (103) comprises a total fat content,
wherein the total fat content comprises one or more fatty acid residues, each of which

    a. has no double bond, and
    b. comprises a number of C atoms per fatty acid residue in the range of 12 to 24,

to a total content in the range of 40 to 75 wt%, based on the total fat content.

10. Chocolate finished product, obtainable by the method (300) according to one of Claims 5 to 8 or with the 3D printer (200) according to Claim 4 or 9.

11. Chocolate product (400), comprising a wall (401),
wherein the wall (401) is **characterized by** a wall thickness (402) in the range of 0.5 to 4 mm.

12. Use of a 3D printer (200) for printing a chocolate mass (103) to obtain a chocolate finished product,
wherein the chocolate mass (103) comprises a total fat content,
wherein the total fat content comprises one or more fatty acid residues, each of which

   a. has no double bond, and
   b. comprises a number of C atoms per fatty acid residue in the range of 12 to 24,

to a total content in the range of 40 to 75 wt%, based on the total fat content.

13. Use of a container for 3D printing of chocolate,
wherein the container comprises

   a) an outer wall (101),
   b) an opening and
   c) a chocolate mass (103),

wherein the outer wall (101) at least partially encloses an inner space (102),
wherein the inner space (102) comprises the chocolate mass (103),
wherein the container is configured such that, by exertion of force on the chocolate mass (103) or the outer wall (101) or both, at least part of the chocolate mass (103) can be dispensed from the opening of the container,
wherein the chocolate mass (103) comprises a total fat content,
wherein the total fat content comprises one or more fatty acid residues, each of which

   a. has no double bond, and
   b. comprises a number of C atoms per fatty acid residue in the range of 12 to 24,

to a total content in the range of 40 to 75 wt%, based on the total fat content.

14. Use of an oil in a chocolate mass (103) for 3D printing of chocolate.

15. Use of a chocolate mass (103) for 3D printing of chocolate,
wherein the chocolate mass (103) comprises a total fat content,
wherein the total fat content comprises one or more fatty acid residues, each of which

   a. has no double bond, and
   b. comprises a number of C atoms per fatty acid residue in the range of 12 to 24,

to a total content in the range of 40 to 75 wt%, based on the total fat content.

# Figure 1

## 100

106

101

102

107

103

104 105

Figure 2

<u>200</u>

Figure 3

300

```
┌─────────────┐
│     301     │
└─────────────┘
       │
       ▼
┌─────────────┐
│     302     │
└─────────────┘
       │
       ▼
┌─────────────┐
│     303     │
└─────────────┘
       │
       ▼
┌─────────────┐
│     304     │
└─────────────┘
```

Figure 4

400

a)
401
402
403

b)
402
401

# Figure 5

## 400

401

402

501

403

Figure 6

400

401

601

Figure 7

400

a)

701

702

b)

701

702

**EP 3 685 674 A1**

Europäisches Patentamt
European Patent Office
Office européen des brevets

## PARTIAL EUROPEAN SEARCH REPORT

under Rule 62a and/or 63 of the European Patent Convention.
This report shall be considered, for the purposes of
subsequent proceedings, as the European search report

Application Number

EP 19 20 2334

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/215453 A1 (CARLOCK ADAM R [US] ET AL) 3 August 2017 (2017-08-03) | 1-8,10 | INV.<br>A23G1/00 |
| Y | * the whole document * | 3 | A23G1/20<br>A23G1/54 |
| X | CN 106 070 933 A (NANJING ADDITIVE MFG RES INST DEV CO LTD) 9 November 2016 (2016-11-09) | 1-4,10 | B65D85/804<br>A23G1/50<br>A23P30/20 |
| Y | * the whole document * | 3 | A23P20/25 |
| X | CN 203 789 039 U (ZHENGZHOU LECAI TECHNOLOGY CO LTD) 27 August 2014 (2014-08-27) | 1-4,10 | |
| Y | * the whole document * | 3 | |
| X | EP 2 690 966 A1 (STRATASYS INC [US]) 5 February 2014 (2014-02-05) | 1-4,10 | |
| Y | * the whole document * | 3 | |
| Y | WO 2010/055033 A1 (FUJI OIL EUROPE [BE]; CLEENEWERCK BERNARD [BE]) 20 May 2010 (2010-05-20) * the whole document * | 3 | |

TECHNICAL FIELDS SEARCHED (IPC)

B65D
A23G
A23P

### INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| The Hague | 17 June 2020 | Fiorenza, Francesca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04E07)

33

Europäisches
Patentamt

European
Patent Office

Office européen
des brevets

**INCOMPLETE SEARCH**
**SHEET C**

Application Number

EP 19 20 2334

```
Claim(s) completely searchable:
      1-8

Claim(s) searched incompletely:
      10

Claim(s) not searched:
      9, 11-15

Reason for the limitation of the search:

Rule 62a EPC
```

## ANNEX TO THE EUROPEAN SEARCH REPORT
## ON EUROPEAN PATENT APPLICATION NO.

EP 19 20 2334

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2020

| Patent document cited in search report | | | Publication date | Patent family member(s) | | | Publication date |
|---|---|---|---|---|---|---|---|
| US 2017215453 | A1 | | 03-08-2017 | NONE | | | |
| CN 106070933 | A | | 09-11-2016 | NONE | | | |
| CN 203789039 | U | | 27-08-2014 | NONE | | | |
| EP 2690966 | A1 | | 05-02-2014 | EP | 2690966 | A1 | 05-02-2014 |
| | | | | US | 2012251688 | A1 | 04-10-2012 |
| | | | | WO | 2012135279 | A1 | 04-10-2012 |
| WO 2010055033 | A1 | | 20-05-2010 | RU | 2011123787 | A | 20-12-2012 |
| | | | | WO | 2010055033 | A1 | 20-05-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Revised Version of the Guidelines for Edible Fats and Oils of the German Food Code. **KLEIN ; RAABE ; WEISS.** Textsammlung Lebensmittelrecht'' [Collection of Texts on Food Law. Prof. Dr. Matthias Horst; Behr's Verlag GmbH & Co. KG, 03 November 2011, vol. 1-5
- Revised Version of the Guidelines for Edible Fats and Oils of the German Food Code. **KLEIN ; RAABE ; WEISS.** Textsammlung Lebensmittelrecht. Prof. Dr. Matthias Horst; Behr's Verlag GmbH & Co. KG, 03 November 2011, vol. 1-5, 5211

- ALS Statements on Oil Seeds and Masses and Sweets Produced Therefrom. **KLEIN ; RAABE ; WEISS.** Textsammlung Lebensmittelrecht. Prof. Dr. Matthias Horst; Behr's Verlag GmbH & Co. KG, vol. 1-5, 7325
- **ZIEGLEDER G. ; SCHWINGS-HANDL I. ; BRULHEIDE M.** Assessment of stored chocolates using nuclear magnetic resonance (NMR). *Sweets,* 1998, vol. 7-8, 30-34